(19) Europäisches Patentamt
European Patent Office
Office européen des brevets

(11) **EP 2 414 185 B1**

(12) **EUROPÄISCHE PATENTSCHRIFT**

(45) Veröffentlichungstag und Bekanntmachung des Hinweises auf die Patenterteilung:
**10.07.2013 Patentblatt 2013/28**

(51) Int Cl.:
*B60K 1/04* (2006.01)          *H01M 10/04* (2006.01)
*H01M 10/50* (2006.01)        *B60L 11/18* (2006.01)

(21) Anmeldenummer: **10710333.5**

(22) Anmeldetag: **25.03.2010**

(86) Internationale Anmeldenummer:
**PCT/EP2010/053870**

(87) Internationale Veröffentlichungsnummer:
**WO 2010/112386 (07.10.2010 Gazette 2010/40)**

(54) **VORRICHTUNG ZUR THERMISCHEN ANBINDUNG EINES ENERGIESPEICHERS**

DEVICE FOR THE THERMAL CONNECTION OF AN ENERGY STORAGE DEVICE

DISPOSITIF DE LIAISON THERMIQUE D'UN ACCUMULATEUR D'ÉNERGIE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.03.2009 DE 102009014954**
         **28.07.2009 DE 102009035088**

(43) Veröffentlichungstag der Anmeldung:
**08.02.2012 Patentblatt 2012/06**

(60) Teilanmeldung:
**13169818.5**

(73) Patentinhaber: **Behr GmbH & Co. KG**
**70469 Stuttgart (DE)**

(72) Erfinder:
• **HIRSCH, Stefan**
**70180 Stuttgart (DE)**

• **WIEBELT, Achim**
**67146 Deidesheim (DE)**
• **ISERMEYER, Tobias**
**74245 Löwenstein (DE)**
• **EISELE, Marc-Thomas**
**70178 Stuttgart (DE)**
• **SCHMID, Caroline**
**70192 Stuttgart (DE)**

(74) Vertreter: **Grauel, Andreas et al**
**Grauel IP**
**Patentanwaltskanzlei**
**Presselstrasse 10**
**70191 Stuttgart (DE)**

(56) Entgegenhaltungen:
**EP-A1- 1 011 156          EP-A1- 2 017 919**
**WO-A1-2008/106948    WO-A2-2008/106946**
**DE-B3-102007 010 743    JP-A- 8 321 329**

EP 2 414 185 B1

# EP 2 414 185 B1

## Beschreibung

Die vorliegende Erfindung bezieht sich auf eine Vorrichtung zur thermischen Anbindung einer Mehrzahl von Kühlblechen oder einer Mehrzahl von Energiespeichern an eine Kühlplatte, sowie auf eine Energiespeichervorrichtung.

In modernen Hybrid-Elektro-Fahrzeugen (HEV-Fahrzeugen)- bzw. Elektrofahrzeugen (EV-Fahrzeugen) werden leistungsfähige Energiespeicher, wie zum Beispiel Li-Ionen- oder NiMH-Akkumulatoren oder Super-Caps, eingesetzt. Bei diesen kommt es beim schnellen Laden und Entladen aufgrund von Widerständen in und außerhalb der Zellen zur Erwärmung. Temperaturen über 50°C schädigen die Energiespeicher dauerhaft. Um die Funktion der Energiespeicher zu gewährleisten, müssen diese aktiv gekühlt werden. Dazu werden die Energiespeicher über Kühlbleche mit einer Kühlplatte in thermischen Kontakt gebracht.

Gemäß dem Stand der Technik werden Kühlbleche flächig, ein-oder beidseitig, auf die Zellenaußenflächen angebracht. Die Kühlbleche werden dann mit der Kühlplatte in Kontakt gebracht. Die Kontaktfläche zur Kühlplatte ist dabei meistens gleich der Fläche des Kühlbleches aus Dicke und Länge. Diese Übergangsfläche ist bei allen Konstruktionen der thermische Flaschenhals.

Durch das einseitige Verbinden des Kühlbleches mit der Kühlplatte entsteht vor allem über der Höhe der Zelle eine Temperaturdifferenz. Der Temperaturdifferenz wird durch die Zellabwärme und die Dicke des Kühlbleches bzw. durch die Größe der Übergangsfläche zwischen Kühlblech und Kühlplatte bestimmt. Ein dickes Kühlblech verringert die Temperaturdifferenz.

Vor allem bei hohen Zellen in Verbindung mit größeren Abwärmen müssen die Kühlbleche sehr dick gewählt werden, um die zulässige Temperaturdifferenz in der Zelle noch einhalten zu können. Dicke Kühlbleche haben eine geringe gravimetrische und volumetrische Energiedichte des Kühlapparates zur Folge. Um die Temperaturdifferenz über die Zellhöhe zu vermeiden, können fluidführende Kühlbleche zwischen den Zellen angebracht werden. Dadurch kann die Temperaturdifferenz in den Zellen fast vermieden werden.

Bei den fluiddurchströmten Kühlblechen zeigen sich Nachteile in der gravimetrischen und volumetrischen Energiedichte, da bedingt durch die Fertigungsmöglichkeiten und den zulässigen Druckverlust in der Gesamtkonstruktion die Blechdicken und die Kühlmittelkanäle nicht beliebig klein gewählt werden können. Außerdem kommt noch das Problem der Dichtheit in den Anschlüssen und der Gleichverteilung des Kühlfluids hinzu. Da jedes Blech mit Kühlfluid bedient werden muss, gibt es bei jedem Blech zumindest einen Anschluss, der abgedichtet werden muss.

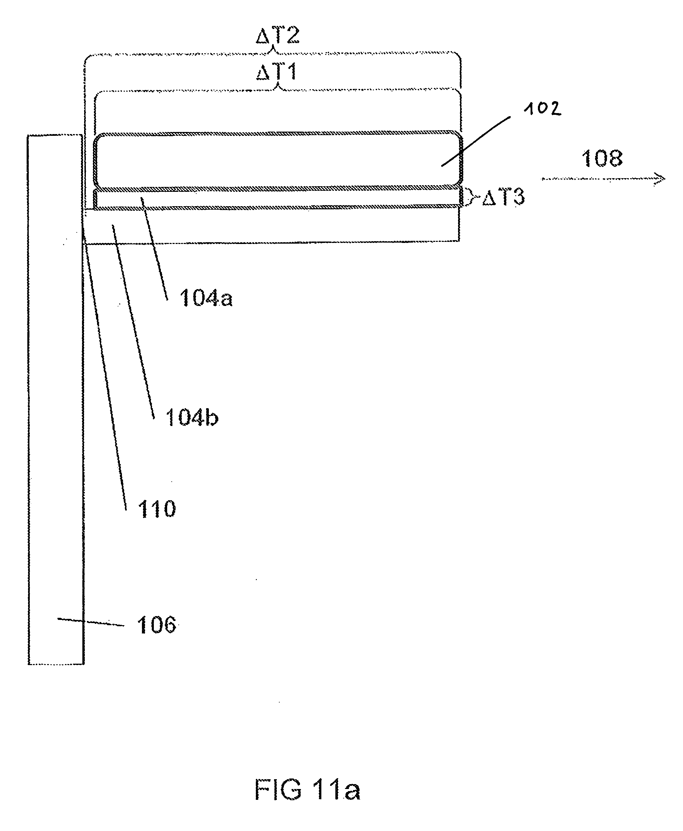

Fig. 11a zeigt eine Energiespeichervorrichtung gemäß dem Stand der Technik, bei der ein gleichmäßiger Wärmeübergang zwischen einer Batteriezelle und (1) < oder einer Mehrzahl von Energiespeichern > einem Kühlblech besteht. Die Energiespeichervorrichtung weist eine Batteriezelle 102, eine elektrisch isolierende Wärmeleitfolie 104a mit einem gleichmäßigen Kontakwiderstand, eine Kühlstruktur 104b, die als wärmeleitendes Kühlblech ausgeführt sein kann und eine Grundplatte 106 mit Kühlung, z.B. in Form von innenliegenden Kanälen auf. Eine Zellhöhe der Batterie ist durch das Bezugszeichen 108 gekennzeichnet. Ferner ist ein Fußpunkt 110 des Kühlblechs gezeigt, der eine stoffschlüssige oder andere wärmeleitende Verbindung darstellt.

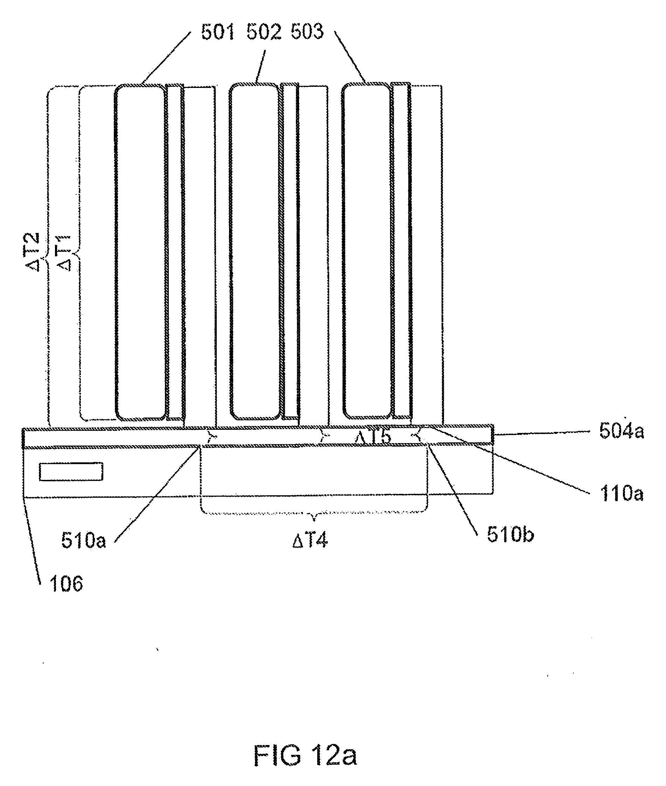

Fig. 12a zeigt eine Energiespeichervorrichtung gemäß dem Stand der Technik, bei der ein gleichmäßiger Wärmeübergang zwischen Kühlblechen und Kühlplatte besteht. Die Energiespeichervorrichtung weist eine erste Batteriezelle 501, eine zweite Batteriezelle 502 und eine dritte Batteriezelle 503 sowie eine Kühlplatte 106 mit Kühlung, z.B. in Form von innen liegenden Kanälen auf. Zwischen der Kühlplatte 106 und den Kühlstrukturen der jeweiligen Batteriezellen ist beispielsweise eine elektrische isolierende Wärmeleitfolie 504a mit einem gleichmäßigen kontaktwiderstand angeordnet. Ferner ist beispielhaft ein Fußpunkt 110a, ein "Bestpunkt" 510a sowie ein "Schlechtpunkt" 510b gezeigt.

Es ist die Aufgabe der vorliegenden Erfindung eine verbesserte Vorrichtung zur thermischen Anbindung einer Mehrzahl von Kühlbrechen oder einer Mehrzahl von Energiespeichern an eine Kühlplatte, sowie eine verbesserte Energiespeichervorrichtung zu schaffen.

Diese Aufgabe wird durch eine Vorrichtung zur thermischen Anbindung einer Mehrzahl von Kühlblechen oder einer Mehrzahl von Energiespeichern an eine Kühlplatte gemäß Anspruch 1, sowie eine Energiespeichervorrichtung gemäß Anspruch 10 gelöst.

Der Kern der vorliegenden Erfindung liegt im Einsatz von Batterie-Kühlelementen mit veränderlichem Wärmeübergang.

Erfindungsgemäß wird eine Anordnung aus Kühlelementen, z.B. in Form eines Kühlblechs und einer oder mehrerer Wärmeleitfolien vorgeschlagen, die einen, über der Höhe des Kühlblechs, veränderlichen Wärmeübergang aufweisen. Damit kann die maximale Temperaturdifferenz an der Oberfläche einer Batteriezelle möglichst klein gehalten werden.

Weiterhin wird nach demselben Prinzip ein veränderlicher Wärmeübergang zwischen Kühlplatte und angebauten Kühlelementen, beispielsweise Kühlblechen vorgeschlagen, um die Temperaturdifferenzen zwischen mehreren Batteriezellen möglichst klein zu halten.

Auf diese Weise ist es möglich, die in der Batterie verbauten Zellen gleichmäßig zu kühlen bzw. aufzuheizen,

2

und dabei die Temperaturdifferenz in den Zellen möglichst gering zu halten.

Dass alle Zellen gleichmäßig gekühlt werden, d.h. alle Zellen auf demselben Temperaturniveau liegen, ist für einen optimalen Betrieb der Batterie wichtig. Das Temperaturniveau der Zellen beeinflusst sowohl die Lebensdauer als auch die Leistung. Ebenso ist es wichtig, die Temperaturdifferenz innerhalb der Zellen, hervorgerufen durch die Kühlung, möglichst gering zu halten. Dies kann mittels des erfindungsgemäßen Ansatzes gewährleistet werden.

Vorteilhafterweise ist erfindungsgemäß weder ein Einsatz von dicken Kühlblechen noch der Einsatz eines Fluids zwischen den Zellen erforderlich, um eine geeignete Temperierung bzw. eine Minimierung einer maximalen Temperaturdifferenz an der Oberfläche einer Batteriezelle zu erreichen.

Die thermische Anbindung kann eine physische Verbindung zu dem Energiespeicher bzw. der Kühlplatte darstellen. Bei dem Energiespeicher kann es sich um eine Batterie oder galvanische Zelle, z. B. um einen Li-Ionen- oder NiMH-Akkumulator oder Super-Cap bzw. Doppelschicht-Kondensator handeln. Die Kühlplatte kann ausgebildet sein, um einen Verbund von Energiezellen aufzunehmen. Die Kühlplatte kann einen innenliegenden Kanal für ein Kühlmedium aufweisen. Mittels der thermischen Anbindung kann ein Ausgleich von Temperaturunterschieden angestrebt und erzielt werden. Dazu kann das Kontaktelement über die Wärmeübergangsfläche mit einer korrespondierenden Kontaktfläche des Energiespeichers oder mit einer korrespondierenden Kontaktfläche der Kühlplatte verbunden sein. Somit kann der Ausgleich des Temperaturunterschieds zwischen dem Kontaktelement und dem Energiespeicher bzw. zwischen dem Kontaktelement und der Kühlplatte über die Wärmeübergangsfläche erfolgen.

Der Ausgleich des Temperaturunterschieds kann durch die unterschiedlichen Wärmeleiteigenschaften des Kontaktelements in dem ersten bzw. zweiten Bereich gesteuert werden. So kann der Ausgleich des Temperaturunterschieds in einem Bereich mit einer guten Wärmeleiteigenschaft schneller erfolgen als in einem Bereich mit einer vergleichsweise weniger guten Wärmeleiteigenschaft. Erfindungsgemäß können Bereiche mit guter Wärmeleiteigenschaft bevorzugt an solchen Stellen des Kontaktelements angeordnet werden, an denen ein schneller Ausgleich des Temperaturunterschieds angestrebt wird. Indem der erste Bereich und der mindestens eine weitere Bereich in Bezug auf die Wärmeübergangsfläche nebeneinander angeordnet sind, kann der Energiespeicher bzw. die Kühlplatte mit beiden Bereichen in direktem Kontakt stehen.

Die erste Wärmeleiteigenschaft und die weitere Wärmeleiteigenschaft können durch unterschiedliche Kontaktwiderstände des ersten Bereichs und des mindestens einen weiteren Bereichs gekennzeichnet sein. Dabei kann ein hoher Kontaktwiderstand eine schlechte Wärmeleiteigenschaft und ein niedriger Kontaktwiderstand eine gute Wärmeleiteigenschaft charakterisieren. Über die unterschiedlichen Kontaktwiderstände lässt sich die jeweils geeignete Wärmeleiteigenschaft festlegen.

Beispielsweise kann der erste Bereich ein erstes Material mit einem ersten Kontaktwiderstand und der mindestens eine weitere Bereich ein weiteres Material mit einem weiteren Kontaktwiderstand aufweisen. Der Kontaktwiderstand kann sowohl von der Art als auch von der Beschaffenheit des eingesetzten Materials abhängig sein. Insbesondere kann der Kontaktwiderstands eines Materials von der Menge an wirksamen Kontaktpunkten abhängig sein. So kann bei Verwendung eines grobkörnigeren Materials ein geringerer Kontaktwiderstand als bei Verwendung eines Materials mit feinerer Körnung erzielt werden.

Auch können die unterschiedlichen Kontaktwiderstände des ersten und des mindestens einen weiteren Bereichs durch unterschiedliche Anpressdrücke auf den ersten Bereich und den mindestens einen weiteren Bereich bestimmt sein. Hier kann ein höherer Anpressdruck einen niedrigeren Kontaktwiderstand und ein niedrigerer Anpressdruck einen höheren Kontaktwiderstand zur Folge haben.

Alternativ oder zusätzlich können die erste Wärmeleiteigenschaft und die weitere Wärmeleiteigenschaft durch unterschiedliche Kontaktflächen in dem ersten Bereich und dem mindestens einen weiteren Bereich gekennzeichnet sein. Hier ist die flächenmäßige Größe einer Kontaktfläche in einem jeweiligen Bereich ausschlaggebend für eine Güte der Wärmeleiteigenschaft des jeweiligen Bereichs. So kann eine größere Kontaktfläche eine bessere Wärmeleiteigenschaft als eine kleinere Kontaktfläche bewirken.

Gemäß einer Ausführungsform können die unterschiedlichen Kontaktflächen durch Ausnehmungen in dem Kontaktelement bestimmt sein. Entsprechende Ausnehmungen können beispielsweise durch Absätze oder Prägungen in ein-oder mehrdimensionalen Mustern realisiert werden.

Alternativ oder zusätzlich können die unterschiedlichen Kontaktflächen durch entsprechende Ausnehmungen in der Kühlplatte bestimmt sein.

Gemäß einer Ausführungsform des erfindungsgemäßen Ansatzes können die erste Wärmeleiteigenschaft und die weitere Wärmeleiteigenschaft durch unterschiedliche Querschnitte des ersten Bereichs und des mindestens einen weiteren Bereichs gekennzeichnet sein. Hier kann ein großer Materialquerschnitt eine gute Wärmeleiteigenschaft und ein kleiner Materialquerschnitt eine schlechte Wärmeleiteigenschaft charakterisieren.

Das Kontaktelement kann eine Folie und/oder ein Kühlblech sein. Bei der Folie kann es sich um eine elektrisch isolierende Wärmeleitfolie mit abgestuft unterschiedlichen Kontaktwiderständen handeln. Die durch die Folie gegebene elektrische Isolierung kann einen Schutz vor Kurzschlüssen in der Batterie bieten. Das Kühlblech kann ausgebildet sein, um z. B. die von dem Energiespeicher aufgenommene Wärme an die Kühlplatte weiterzuleiten. Das Kühlblech kann zusätzlich als eine mechanische Halterung für die Energiezelle fungieren. Ein Vorteil der erfindungsgemäßen Anordnung liegt in der Vielzahl von möglichen Variationen zum Bereitstellen des veränderlichen Wärmeübergangs, da entsprechende Veränderungen sowohl an der Folie als auch an dem Kühlblech sowie kombiniert an beiden Elementen vorgenommen werden können. Die Anordnung kann somit an unterschiedliche Anforderungen und Gegebenheiten angepasst werden. Auch ein Einsatz lediglich der Folie, lediglich des Kühlblechs oder beispielsweise ein Einsatz von zwei Kühlblechen pro Energiespeicher oder andere Kombinationen sind im Rahmen des erfindungsgemäßen Ansatzes möglich.

Die vorliegende Erfindung schafft eine Vorrichtung zur thermischen Anbindung einer Mehrzahl von Kühlblechen an eine Kühlplatte, mit folgenden Merkmalen: einem Kontaktelement mit einer Wärmeübergangsfläche zum Bereitstellen der thermischen Anbindung, wobei das Kontaktelement einen ersten Bereich mit einer ersten Wärmeleiteigenschaft und mindestens einen weiteren Bereich mit einer weiteren Wärmeleiteigenschaft aufweist und wobei der erste Bereich und der mindestens eine weitere Bereich in Bezug auf die Wärmeübergangsfläche nebeneinander angeordnet sind und wobei der erste Bereich zur thermischen Anbindung eines ersten Kühlblechs und der mindestens eine weitere Bereich zur thermischen Anbindung eines weiteren Kühlblechs geeignet ist.

Über die Mehrzahl von Kühlblechen kann eine Mehrzahl von Energiespeichern thermisch an die Kühlplatte angebunden werden. Dabei können der erste und der mindestens eine weitere Bereich zur thermischen Anbindung aneinander angrenzen oder voneinander beabstandet sein. Mit anderen Worten kann das Kontaktelement als durchgängiges Element realisiert sein oder aus mehreren Einzelteilen aufgebaut sein.

Zudem schafft die vorliegende Erfindung eine Energiespeichervorrichtung mit folgenden Merkmalen: mindestens einem Energiespeicher; einer Kühlplatte; und mindestens einer Vorrichtung zur thermischen Anbindung gemäß einem der vorangegangenen Ansprüche, die zwischen dem mindestens einem Energiespeicher und der Kühlplatte angeordnet ist

Bevorzugte Ausführungsbeispiele der vorliegenden Erfindung werden nachfolgend Bezug nehmend auf die beiliegenden Zeichnungen näher erläuterk. Es zeigen:

| | |
|---|---|
| Figur 1a | Darstellung einer nicht zur Erfindung gehörenden Vorrichtung zur thermischen Anbindung eines Energiespeichers ; |
| Figuren 2 bis 4 | Darstellungen einer nicht zur Erfindung gehörenden Vorrichtung zur thermischen Anbindung eines Energiespeichers ; |
| Figur 5a | Darstellung einer Vorrichtung zur thermischen Anbindung einer Kühlplatte, gemäß einem Ausführungsbeispiel der vorliegenden Erfindung; |
| Figuren 6 bis 10 | Darstellungen einer Vorrichtung zur thermischen Anbindung einer Kühlplatte, gemäß weiteren Ausführungsbeispielen der vorliegenden Erfindung; |
| Fig. 11a | Darstellung einer Vorrichtung zur thermischen Anbindung eines Energiespeichers, gemäß dem Stand der Technik; |
| Fig. 12a | Darstellung einer Vorrichtung zur thermischen Anbindung einer Kühlplatte, gemäß dem Stand der Technik; und |
| Figuren 13 bis 21 | Darstellungen eine nicht zur Erfindung gehörenden Vorrichtung zur thermischen Anbindung eines Fluids. |

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

Bei einem Wärmeübergang zwischen Batteriezelle und Kühlblech fließt bei flächiger und über die Höhe gleichmäßiger thermischer Anbindung eines Kühlblechs an eine Zellaußenfläche der Wärmestrom über die gesamte Zellhöhe bis zur Wärmesenke am Fuß des Kühlbleches (= Zellfuß). Naturgemäß ergibt sich durch die Höhe des Kühlblechs und je nach ihrer Dicke eine nicht unerhebliche Temperaturdifferenz im Kühlblech. Dementsprechend hoch ist auch der Temperaturdifferenz über der Zellhöhe, die im Folgenden mit $\Delta T1$ bezeichnet wird.

Erfindungsgemäß wird ein variabler Wärmeübergang zwischen Batteriezelle und Kühlblech vorgesehen. Dazu wird der Wärmeübergang lokal zwischen Zelloberfläche und Kühlblech in Abhängigkeit der Kühlblechhöhe und der Kühlblechtemperatur an entsprechenden Stelle verändert. Auf diese Weise kann, wie gewünscht, eine geringere Temperaturdifferenz auf der Zelloberfläche erreicht werden. Weiterhin kann damit gezielt ein Optimum gewählt werden, zwischen einerseits maximal zulässiger Temperaturdifferenz auf der Zelloberfläche $\Delta T1$ und andererseits möglichst

geringer Temperaturdifferenz zwischen höchster Temperatur auf der Zelloberfläche und kältester Temperatur am Fuß des Kühlblechs ΔT2.

Der Wärmestrom Q läßt sich durch folgende Formel darstellen:

$$Q = k \times A \times \Delta T$$

Dabei ist zwischen Zelloberfläche und Kühlblech:

A: die Kontaktfläche

k: der Kontaktwiderstand

ΔT: die treibende Temperaturdifferenz

Wie in den folgenden Figuren gezeigt, kann der veränderliche Wärmeübergang, insbesondere zu einer Batteriezelle auf verschiedene Weise realisiert werden.

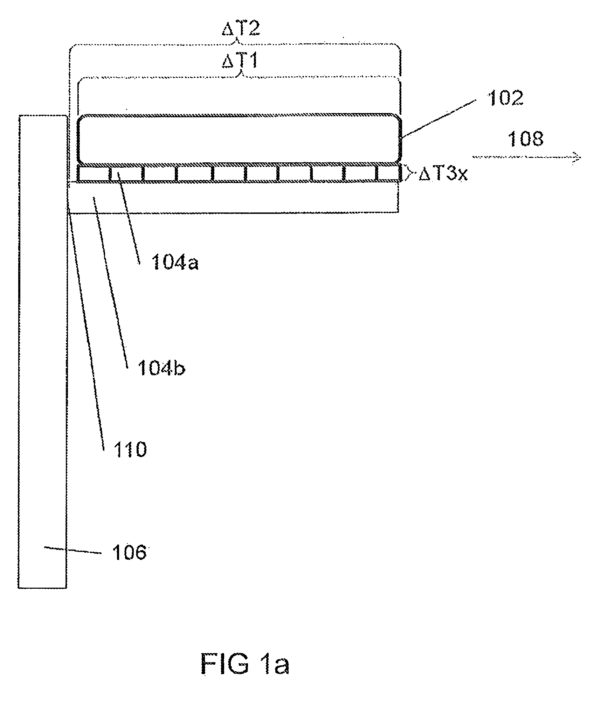

Fig. 1a zeigt eine nicht zur Erfindung gehörende Energiespeichervorrichtung mit einer Vorrichtung zur thermischen Anbindung eines Energiespeichers. Gemäß diesem Beispiel wird ein variabler Wärmeübergang zwischen einer Batteriezelle und einem Kühlblech durch Materialien mit verschiedenen Kontaktwiderständen erzielt.

Die Energiespeichervorrichtung weist einen Energiespeicher 102, ein Kontaktelement, das gemäß diesem Beispiel eine Folie 104a und ein Kühlblech 104b umfasst, sowie eine Kühlplatte 106 auf.

Der Energiespeicher 102, die Folie 104a und das Kühlblech 104b sind parallel zueinander angeordnet, wobei die Folie 104a, zwischen dem Energiespeicher 102 und dem Kühlblech 104b angeordnet ist. Die Kühlplatte 106 ist rechtwinklig zu dem Kühlblech 104b angeordnet.

Der Energiespeicher 102 liegt über seine Höhe bzw. Zellhöhe, deren Richtung durch den Pfeil 108 gekennzeichnet ist, an der Folie 104a an. Die Folie 104a, liegt mit einer, dem Energiespeicher 102 gegenüberliegenden Seite an dem Kühlblech 104b an. Das Kühlblech 104b ist mit einer der Kühlplatte 106 zugewandten Fläche, die als Fußpunkt 110 bezeichnet ist, mit der Kühlplatte 106 verbunden. Gemäß diesem Beispiel sind der Energiespeicher 102 und die Folie 104a von der Kühlplatte 106 beabstandet.

Eine Temperaturdifferenz auf einer Oberfläche des Energiespeichers 102 ist durch ΔT1 charakterisiert. ΔT2 kennzeichnet eine Temperaturdifferenz zwischen einer höchsten Temperatur auf der Oberfläche des Energiespeichers 102 und einer tiefsten Temperatur am Fußpunkt 110. ΔT3x bezeichnet unterschiedliche Temperaturdifferenzen zwischen der Oberfläche des Energiespeichers 102 und einer gegenüberliegenden Oberfläche des Kühlblechs 104b. Dabei kann eine höchste Temperaturdifferenz ΔT3x im Bereich des Fußpunktes 110 liegen.

Der Energiespeicher 102 kann als eine Batteriezelle ausgeführt sein. Bei der Folie kann es sich um eine elektrisch isolierende Wärmeleitfolie 104a mit variablem Kontaktwiderstand handeln. Der variable Kontaktwiderstand der Wärmeleitfolie 104a kann dadurch gegeben sein, dass die Wärmeleitfolie 104a, wie in Fig. 1a gezeigt, in eine Mehrzahl von Bereichen mit unterschiedlichen spezifischen Kontaktwiderständen unterteilt ist. Bei dem Kühlblech kann es sich um eine Kühlstruktur 104b und insbesondere um ein wärmeleitendes Kühlblech handeln. Der Fußpunkt 110 des Kühlblechs 104b kann stoffschlüssig oder mit einer anderen wärmeleitenden Verbindung mit der Kühlplatte 106 verbunden sein. Die Kühlplatte 106 kann als eine Grundplatte mit Kühlung, z.B. über innenliegende Kanäle, ausgeführt sein.

In dem in Fig. 1a gezeigten Beispiel wird ein variabler oder veränderlicher Wärmeübergang zwischen der Batteriezelle und dem Kühlblech durch Materialien mit verschiedenen Kontaktwiderständen, d.h. durch eine Veränderung des k-Wertes erreicht. Gemäß diesem Beispiel werden verschieden gut wärmeleitende Materialien, beispielsweise auf verschiedenen Kunststoffen (PVC, PA oder POM) basierende Materialien oder etwa Streifen von Wärmeleitfolien mit abgestuft unterschiedlichen Kontaktwiderständen, so zwischen Kühlblech und Batteriezelle angeordnet, dass sich die beste Wärmeleitung bzw. der kleinste Kontaktwiderstand am "Schlechtpunkt" ergibt. Der Schlechtpunkt entspricht gemäß diesem Beispiel dem höchsten Punkt des Kühlblechs und/oder der Batteriezelle. Neben einer ersten Wärmeleitfolie wird, abgestuft in Richtung Fußpunkt ("Bestpunkt") des Kühlbleches, mindestens eine weitere Wärmeleitfolie mit schlechterer Wärmeleiteigenschaft als die erste bzw, mit einem höheren Kontaktwiderstand als die erste eingesetzt. Auf diese Weise kann die Temperaturdifferenz ΔT1 auf der Batterieoberfläche verringert werden. Eine alternative Lösung besteht durch Verwendung einer Wärmeleitfolie, die bereits in eine Dimension hinsichtlich des Kontaktwiderstands eine geeignete Abstufung oder ein Profil aufweist. Dies kann z.B. über unterschiedliche Füllungsgrade erfolgen, d.h. die Materialeigenschaften ändern sich innerhalb einer Dimension. Die Anzahl der Bereiche und ihre jeweilige Höhe bzw. Breite können in Abhängigkeit von der gewünschten maximalen Temperaturdifferenz und von der Größe des ab- bzw, zuzuführenden Wärmestroms geeignet variieren.

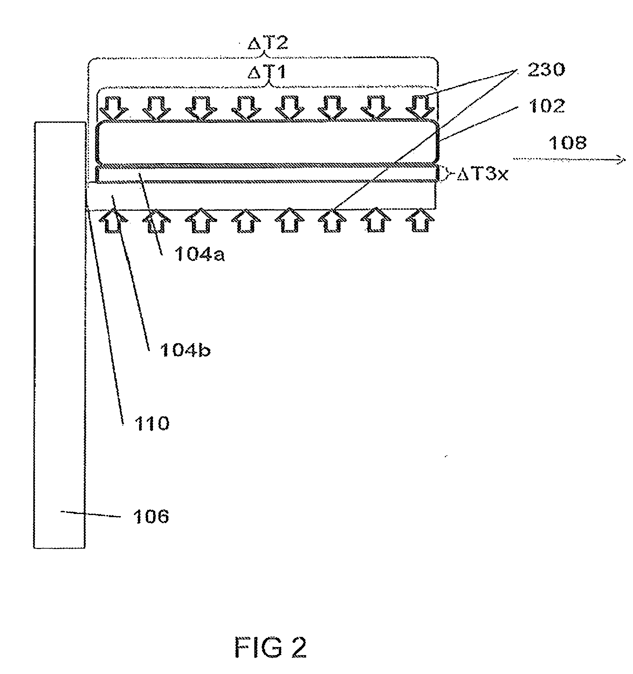

Fig. 2 zeigt eine nicht zur Erfindung gehörende Energiespeichervorrichtung mit einer Vorrichtung zur thermischen Anbindung eines Energiespeichers. diesem Beispiel wird ein variabler Wärmeübergang zwischen einer Batteriezelle und einem Kühlblech durch eine Veränderung eines Anpressdrucks erzielt.

Die in Fig. 2 gezeigte Energiespeichervorrichtung entspricht der in Fig. 1 a gezeigten Energiespeichervorrichtung, mit dem Unterschied, dass der Wärmeübergang nicht durch unterschiedliche Materialien in der Wärmeleitfolie 104a sondern durch einen variablen Anpressdruck realisiert wird. Somit kann die Folie hier als elektrisch isolierende Wärmeleitfolie mit gleichmäßigem Kontaktwiderstand ausgeführt sein. Der variable Anpressdruck zwischen dem Energiespeicher 102 und dem Kühlblech 104a ist in Fig. 2 durch eine Mehrzahl von Pfeilen gekennzeichnet, von denen der Übersichtlichkeit halber lediglich zwei mit dem Bezugszeichen 230 versehen sind.

Gemäß diesem Beispiel wird der veränderliche Wärmeübergang durch Veränderung des "k"-Wertes realisiert. Der Kontaktwiderstand "k" ist unter anderem eine Funktion des Anpressdrucks. Ein hoher Anpressdruck bewirkt eine Verringerung des Kontaktwiderstandes. Gemäß diesem Ausführungsbeispiel wird durch Veränderung des Anpressdrucks des Kühlblechs zur Zelle über der Kühlblechhöhe der Wärmeübergang geeignet beeinflusst, indem am "Schlechtpunkt" der höchste Anpressdruck aufgebracht wird. Abgestuft in Richtung "Fußpunkt" (Bestpunkt) des Kühlbleches wird mindestens ein anderer, bevorzugt kleinerer Anpressdruck eingesetzt, wodurch der Kontaktwiderstand sich erhöht. Auf diese Weise kann die Temperaturdifferenz ΔT1 auf der Batterieoberfläche verringert werden.

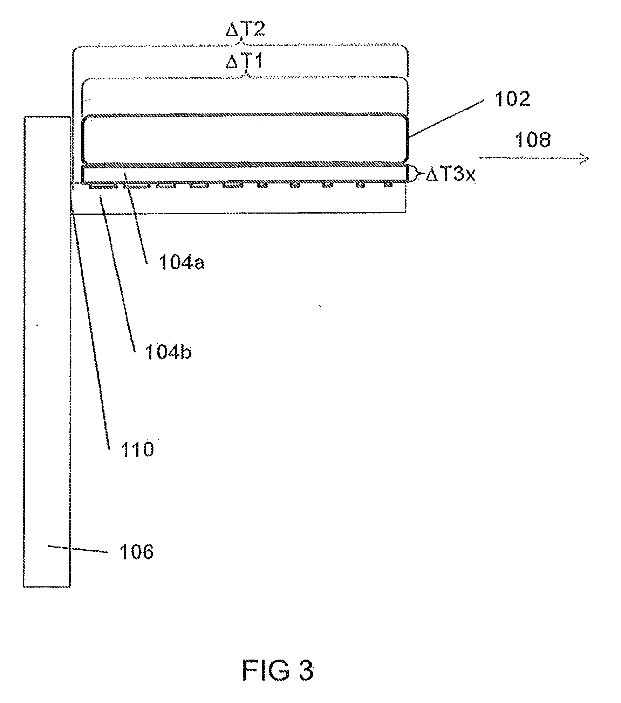

Fig. 3 zeigt eine nicht zur Erfindung gehörende Energiespeichervorrichtung mit einer Vorrichtung zur thermischen Anbindung eines Energiespeichers. Gemäß diesem Beispiel wird ein variabler Wärmeübergang zwischen einer Batteriezelle und einem Kühlblech durch verschieden große Kontaktflächen am Kühlblech erzielt.

Die in Fig. 3 gezeigte Energiespeichervorrichtung entspricht der in Fig. 2 gezeigten Energiespeichervorrichtung, mit dem Unterschied, dass der Wärmeübergang nicht durch einen variablen Anpressdruck auf die Wärmeleitfolie 104a sondern durch verschieden große Kontaktflächen des Kühlblechs 104b bezüglich der Wärmeleitfolie 104a realisiert wird. Die Wärmeleitfolie 104a kann mit gleichmäßigen Kontaktwiderstand realisiert sein. Im Unterschied zu dem in Fig. 2 gezeigten Beispiel l ist die Kühlstruktur hier als wärmeleitendes Kühlblech 104b mit Absätzen, Prägungen oder ähnlichem ausgeführt, wie es in Fig. 3 anhand der durchbrochenen Linie dargestellt ist. Durch die unterschiedlich großen Lücken der durchbrochenen Linie werden die verschieden großen Kontaktflächen auf der Oberfläche des Kühlblechs 104b schematisch dargestellt.

Bei dem in Fig. 3 gezeigten Beispiel wird der veränderliche Wärmeübergang durch Veränderung des "A"-Wertes, der die Kontaktfläche repräsentiert, realisiert. Gemäß diesem Beispiel werden verschieden große Kontaktflächen zwischen Batteriezelle und Kühlblech eingesetzt, so dass am Schlechtpunkt eine möglichst große Kontaktfläche zur Verfügung steht. Abgestuft in Richtung "Fußpunkt" ("Bestpunkt") des Kühlbleches wird mindestens eine andere, bevorzugt kleinere Kontaktfläche eingesetzt, wodurch sich der Wärmeübergang lokal verschlechtert. Auf diese Weise kann die Temperaturdifferenz ΔT1 auf der Batterieoberfläche verringert werden. Beispielsweise kann die Kontaktfläche am Kühlblech über der Höhe durch Absätze und/oder Prägungen in ein- oder mehrdimensionalen Mustern, z. B. Streifen- und/oder Lochmuster, gezielt verändert werden.

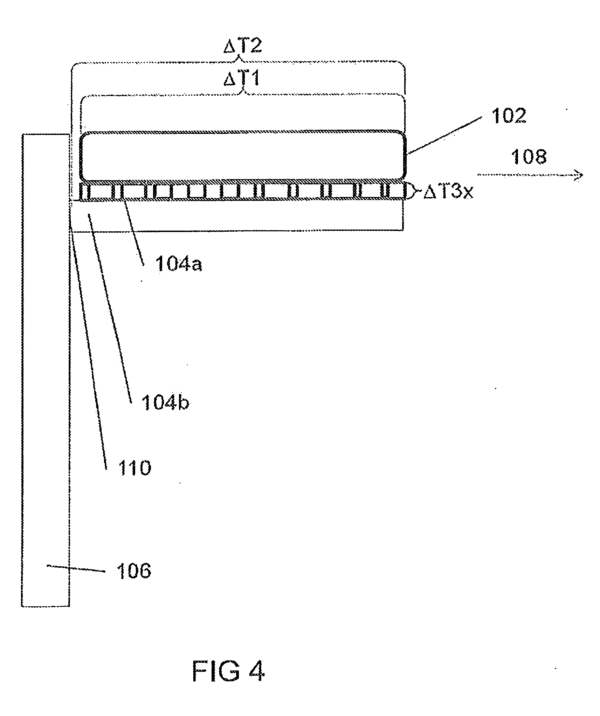

Fig. 4 zeigt eine nicht zur Erfindung gehörende Energiespeichervorrichtung mit einer Vorrichtung zur thermischen Anbindung eines Energiespeichers. Gemäß diesem Beispiel wird ein variabler Wärmeübergang zwischen einer Batteriezelle und einem Kühlblech durch verschieden große Kontaktflächen an der Wärmeleitfolie erzielt.

Die in Fig. 4 gezeigte Energiespeichervorrichtung entspricht der in Fig. 3 gezeigten Energiespeichervorrichtung, mit dem Unterschied, dass der Wärmeübergang hier durch verschieden große Kontaktflächen der Wärmeleitfolie 104a bezüglich des Kühlbleches 104b und/oder bezüglich der Energiespeichervorrichtung 102 realisiert wird. Dabei kann das Kühlblech 104b analog zu den Figuren 1a und 2 wieder als eine Kühlstruktur in Form eines wärmeleitenden Kühlbleches ohne Prägungen oder dergleichen ausgeführt sein. Im Unterschied zu Fig. 3 ist jedoch bei dem in Fig. 4 gezeigten Beispiel die Folie als elektrisch isolierende Wärmeleitfolie 104a mit gleichmäßigem Kontaktwiderstand aber variabler Kontaktfläche ausgeführt. Beispielsweise ist die Wärmeleitfolie 104a gelocht. In der Fig. 4 ist dies anhand der verschieden großen Unterbrechungen in der Darstellung der Folie 104a dargestellt.

Bei dem in Fig. 4 gezeigten Beispiel wird der veränderliche Wärmeübergang wiederum durch Veränderung des "A"-Wertes realisiert. Der veränderliche Wärmeübergang wird analog zu Fig. 3 erzielt, mit dem Unterschied, dass die Veränderung bei der Kontaktfläche statt in dem Kühlblech in der Wärmeleitfolie vorgenommen wird, z.B. durch eine geeignete Lochung.

Analog zu den beispielhaften Lösungen, die in den Figuren 1a bis 4 gezeigt sind, kann auch ein variabler Wärmeübergang zwischen einem oder mehreren Kühlblechen und einer Kühlplatte hergestellt werden. In den nachfolgenden Figuren ist jeweils eine Mehrzahl von Kühlblechen in Verbindung mit entsprechenden Energiespeicheranordnungen gezeigt. Die Kühlbleche können aus Platzgründen direkt zwischen den Energiespeichern angeordnet sein. Unter einer Kühlplatte wird im Allgemeinen ein Kühlmedium führendes Bauteil verstanden, an dem die Kühlbleche zur Wärmeabfuhr angebracht sind.

Wie in den folgenden Figuren gezeigt, kann der veränderliche Wärmeübergang, insbesondere zu der Kühlplatte auf verschiedene Weise realisiert werden.

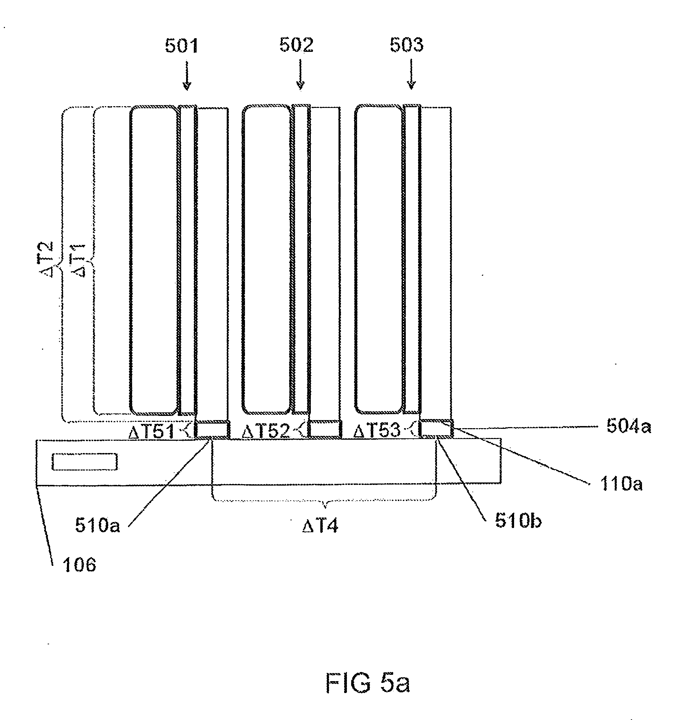

Fig. 5a zeigt eine Energiespeichervorrichtung mit einer Vorrichtung zur thermischen Anbindung einer Kühlplatte gemäß einem Ausführungsbeispiel der vorliegenden Erfindung. Gemäß diesem Ausführungsbeispiel wird ein variabler Wärmeübergang zwischen Kühlblechen und der Kühlplatte durch Materialien mit verschiedenen Kontaktwiderständen erzielt. Dieser Ansatz entspricht dem anhand von Fig. 1a beschriebenen Ansatz.

Die Energiespeichervorrichtung weist eine erste Energiespeicheranordnung 501, eine zweite Energiespeicheranordnung 502 und eine dritte Energiespeicheranordnung 503 sowie eine Kühlplatte 106 auf. Die Energiespeicheranordnungen 501, 502, 503 weisen, wie in Fig. 1a beschrieben, jeweils einen Energiespeicher in Form einer Batteriezelle, eine Folie und ein Kühlblech auf. Der Übersichtlichkeit halber sind die Energiespeicher, die Folien und die Kühlbleche in dieser und den folgenden Figuren nicht mit Bezugszeichen versehen. Die Kühlbleche können entweder direkt oder über eine Zwischenfolie 504a mit der Kühlplatte 106 verbunden sein. Gemäß diesem Ausführungsbeispiel sind die Kühlbleche der Energiespeicheranordnungen 501, 502, 503 jeweils über die Zwischenfolie 504a mit der Kühlplatte 106 verbunden. Die Zwischenfolie 504a kann durchgängig auf einer Oberfläche der Kühlplatte 106 angeordnet sein oder, wie in Fig. 5a gezeigt, aus einzelnen Folienabschnitten bestehen, die jeweils zwischen den einzelnen Kühlblechen und der Oberfläche der Kühlplatte 106 angeordnet sind. Um die unterschiedlichen Kontaktwiderstände auszubilden, können die einzelnen Folienabschnitte unterschiedliche Materialien aufweisen.

Die Zwischenfolie 504a kann als elektrisch isolierende Wärmeleitfolie mit variablem Kontaktwiderstand ausgeführt sein. Gemäß diesem Ausführungsbeispiel ist eine der Kühlplatte 106 zugewandte Fläche der Kühlbleche jeweils als Fußpunkt eines Kühlblechs 110a bezeichnet. Außerdem sind in Fig. 5a ein Bestpunkt 510a sowie ein Schlechtpunkt 510b gezeigt. Der Bestpunkt 510a ist der ersten Anordnung 501 zugeordnet, und der Schlechtpunkt 510b ist der dritten Anordnung 503 zugeordnet. Die Kühlplatte 106 kann als Kühlplatte mit Kühlung, z. B. mit innenliegenden Kanälen, ausgeführt sein.

Eine Temperaturdifferenz auf einer Oberfläche der Energiespeicher ist durch $\Delta T1$ charakterisiert. $\Delta T2$ kennzeichnet eine Temperaturdifferenz zwischen einer höchsten Temperatur auf der Oberfläche der jeweiligen Energiespeicher und einer tiefsten Temperatur am jeweiligen Fußpunkt 110a der Kühlbleche. $\Delta T4$ repräsentiert eine Temperaturdifferenz zwischen den Kühlblechen und damit zwischen den Batteriezellen der ersten Anordnung 501 und der dritten Anordnung 503. $\Delta T51$, $\Delta T52$, $\Delta T53$ kennzeichnen die individuellen Temperaturdifferenzen über die einzelnen Folienabschnitte. Die individuellen Temperaturdifferenzen $\Delta T51$, $\Delta T52$, $\Delta T53$ können durch die unterschiedlichen Materialien der einzelnen Folienabschnitte beeinflusst werden.

Gemäß dem in Fig. 5a gezeigten Ausführungsbeispiel kann der variable Wärmeübergang zwischen Kühlblech und Kühlplatte durch Veränderung des "k"-Wertes erzielt werden. Dazu werden gut wärmeleitende Materialien, etwa Streifen von Wärmeleitfolien mit abgestuft unterschiedlichen Kontaktwiderständen, so zwischen Kühlplatte und Kühlblechen angeordnet, dass sich die beste Wärmeleitung bzw. der kleinste Kontaktwiderstand am Schlechtpunkt ergibt. Im Fall eines Kühlens (Kühlfall) kann dieser der wärmste Bereich der Kühlplatte sein, während er umgekehrt im Fall eines Heizens (Heizfall) der kälteste Bereich einer "Heizplatte" sein kann. Abgestuft in Richtung Bestpunkt, der im Fall des Kühlens der kälteste Bereich der Kühlplatte und im Fall des Heizens der wärmste Bereich der "Heizplatte" ist, wird mindestens eine weitere Wärmeleitfolie mit schlechterer Wärmeleiteigenschaft als die erstere und/oder höherem Kontaktwiderstand als die erstere eingesetzt. Auf diese Weise kann die Temperaturdifferenz zwischen den Kühlblechen und damit die Temperaturdifferenzen zwischen den Batteriezellen einer Gesamtbatterie verringert werden. Eine alternative Lösung besteht in einer Verwendung einer Wärmeleitfolie, die bereits hinsichtlich des Kontaktwiderstands eine geeignete Abstufung oder ein Profil aufweist, z.B. über unterschiedliche Füllungsgrade, d.h. die Materialeigenschaften ändern sich innerhalb der einen Folie.

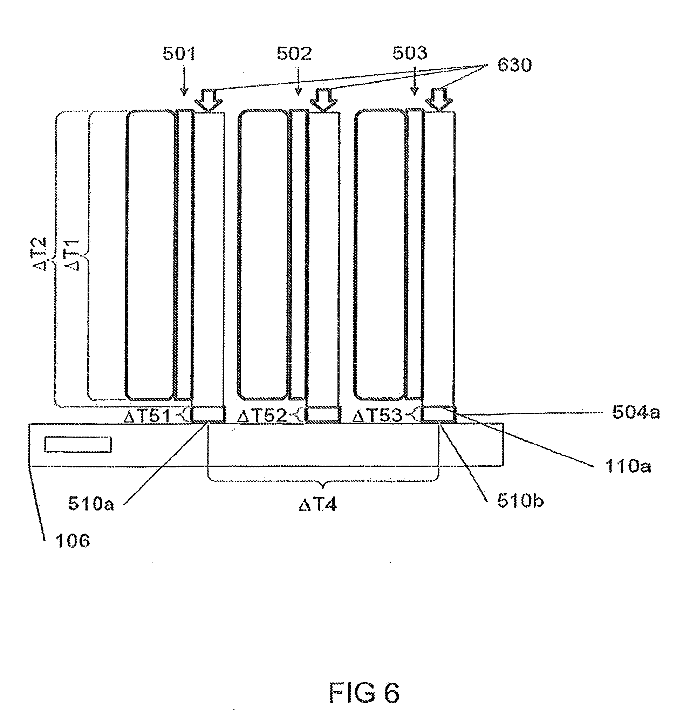

Fig. 6 zeigt eine Energiespeichervorrichtung mit einer Vorrichtung zur thermischen Anbindung einer Kühlplatte gemäß einem Ausführungsbeispiel der vorliegenden Erfindung. Gemäß diesem Ausführungsbeispiel wird ein variabler Wärmeübergang zwischen den Kühlblechen und der Kühlplatte durch eine Veränderung eines Anpressdrucks erzielt.

Die in Fig. 6 gezeigte Energiespeichervorrichtung entspricht der in Fig. 5a gezeigten Energiespeichervorrichtung, mit dem Unterschied, dass der Wärmeübergang nicht durch unterschiedliche Materialien in der Zwischenfolie 504a sondern durch einen variablen Anpressdruck realisiert wird. Somit kann die Folie 504a hier als elektrisch isolierende Wärmeleitfolie mit gleichmäßigem Kontaktwiderstand ausgeführt sein. Der variable Anpressdruck ist in Fig. 6 durch eine Mehrzahl von Pfeilen gekennzeichnet, die mit dem Bezugszeichen 630 versehen sind.

Gemäß diesem Ausführungsbeispiel wird der veränderliche Wärmeübergang durch Veränderung des "k"-Wertes realisiert. Der Kontaktwiderstand "k" ist unter anderem eine Funktion des Anpressdrucks. Durch Veränderung des Anpressdrucks des Kühlblechs zur Kühlplatte kann der Wärmeübergang geeignet beeinflusst werden, indem am Schlechtpunkt der höchste Anpressdruck aufgebracht wird. Im Fall einer Kühlung entspricht der Schlechtpunkt dem wärmsten Bereich der Kühlplatte, während er umgekehrt im Fall eines Heizens dem kältesten Bereich einer "Heizplatte" entspricht. Abgestuft in Richtung Bestpunkt der Kühlplatte wird mindestens ein anderer, bevorzugt kleinerer Anpressdruck eingesetzt, wodurch sich der Kontaktwiderstand $\Delta T5x$ erhöht. Auf diese Weise kann die Temperaturdifferenz $\Delta T4$ zwischen den Kühlblechen und damit zwischen den Batteriezellen verringert werden.

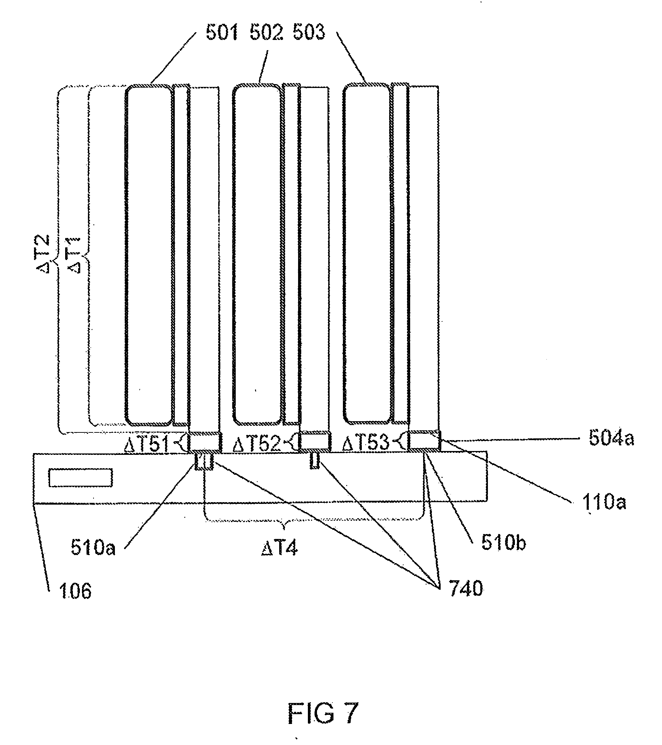

Fig. 7 zeigt eine Energiespeichervorrichtung mit einer Vorrichtung zur thermischen Anbindung einer Kühlplatte

gemäß einem Ausführungsbeispiel der vorliegenden Erfindung. Gemäß diesem Ausführungsbeispiel wird ein variabler Wärmeübergang zwischen den Kühlblechen und der Kühlplatte durch verschieden große Kontaktflächen an der Kühlplatte erzielt.

Fig. 7 zeigt eine Energiespeichervorrichtung, die der in Fig. 5a gezeigten Energiespeichervorrichtung entspricht, mit dem Unterschied, dass der Wärmeübergang nicht durch unterschiedliche Materialien in der Zwischenfolie 504a sondern durch verschieden große Kontaktflächen an der Kühlplatte 106 realisiert wird. Im Gegensatz zu dem in Fig. 5a gezeigten Ausführungsbeispiel kann die Folie hier als elektrisch isolierende Wärmeleitfolie mit gleichmäßigem Kontaktwiderstand ausgeführt sein. In Fig. 7 weist die Kühlplatte 106 mit Kühlkanälen eine variable Kontaktfläche zu den Kühlblechen auf. Wie in Fig. 7 gezeigt können die variablen Kontaktflächen realisiert werden, indem Bereiche der Kühlplatte 106, die gegenüber den einzelnen Kühlblechen angeordnet sind, mit verschieden großen Ausnehmungen 740 versehen sind. Durch die Ausnehmungen 740 wird die Größe der jeweiligen Kontaktfläche zu der Zwischenfolie 504a und damit zu dem jeweiligen Kühlblech bestimmt.

Gemäß dem in Fig. 7 gezeigten Ausführungsbeispiel wird der veränderliche Wärmeübergang zwischen Kühlblech und Kühlplatte über eine Veränderung des "A"-Wertes erzielt. Dazu werden verschieden große Kontaktflächen zwischen Batteriezelle und Kühlblech eingesetzt, so dass am Schlechtpunkt, d. h. dem wärmsten Bereich der Kühlplatte im Fall eines Kühlens oder dem kältesten Bereich der "Heizplatte" im Fall eines Heizens, eine möglichst große Kontaktfläche zur Verfügung steht. Abgestuft in Richtung Bestpunkt der Kühlplatte), der im Fall des Kühlens der kälteste Bereich der Kühlplatte und umgekehrt im Fall des Heizens der wärmste Bereich der "Heizplatte" ist, wird mindestens eine andere, bevorzugt kleinere Kontaktfläche eingesetzt, wodurch sich der Wärmeübergang lokal verschlechtert. Auf diese Weise kann die Temperaturdifferenz $\Delta T4$ zwischen den Kühlblechen und damit zwischen den Batteriezellen verringert werden. Beispielsweise kann die Kontaktfläche an der Kühlplatte durch Absätze, Lochungen, Prägungen etc. in ein- oder mehrdimensionalen Mustern, z. B. Streifen- und/oder Lochmuster,. gezielt verändert werden

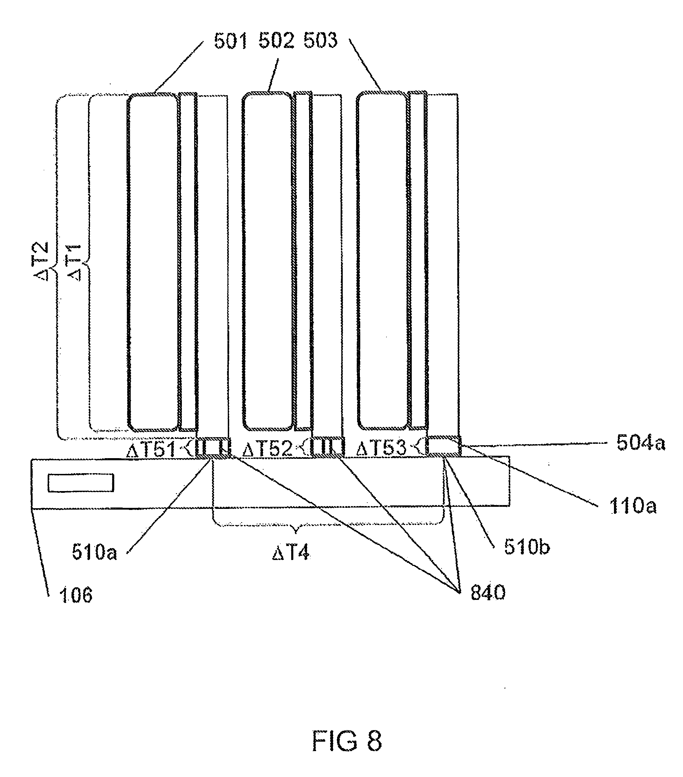

Fig. 8 zeigt eine Energiespeichervorrichtung mit einer Vorrichtung zur thermischen Anbindung einer Kühlplatte gemäß einem Ausführungsbeispiel der vorliegenden Erfindung. Gemäß diesem Ausführungsbeispiel wird ein variabler Wärmeübergang zwischen den Kühlblechen und der Kühlplatte durch verschieden große Kontaktflächen an der Wärmeleitfolie erzielt.

Die in Fig. 8 gezeigte Energiespeichervorrichtung entspricht der in Fig. 7 gezeigten Energiespeichervorrichtung, mit dem Unterschied, dass der Wärmeübergang hier durch verschieden große Kontaktflächen der Zwischenfolie 504a bezüglich der Kühlbleche und der Kühlplatte 106 realisiert wird. Die Kühlplatte 106 kann hier analog zu den Figuren 5a und 6 wieder als eine Kühlplatte mit Kühlkanälen ausgeführt sein. Im Unterschied zu Fig. 7 ist bei dem in Fig. 8 gezeigten Ausführungsbeispiel die Zwischenfolie 504a als elektrisch isolierende Wärmeleitfolie mit gleichmäßigem Kontaktwiderstand aber variabler Kontaktfläche ausgeführt. Beispielsweise ist die Wärmeleitfolie 504a gelocht. In Fig. 8 ist dies anhand der verschieden großen Unterbrechungen 840 in der Darstellung der einzelnen Folienabschnitte ersichtlich.

Bei dem in Fig. 8 gezeigten Ausführungsbeispiel wird der veränderliche Wärmeübergang zwischen Kühlblech und Kühlplatte auf ähnliche Weise hergestellt, wie es in Fig. 7 beschrieben ist, mit dem Unterschied, dass die Veränderung bei der Kontaktfläche in der Wärmeleitfolie bzw. Zwischenrolle abgebildet wird, z.B. durch eine geeignete Lochung der Folie.

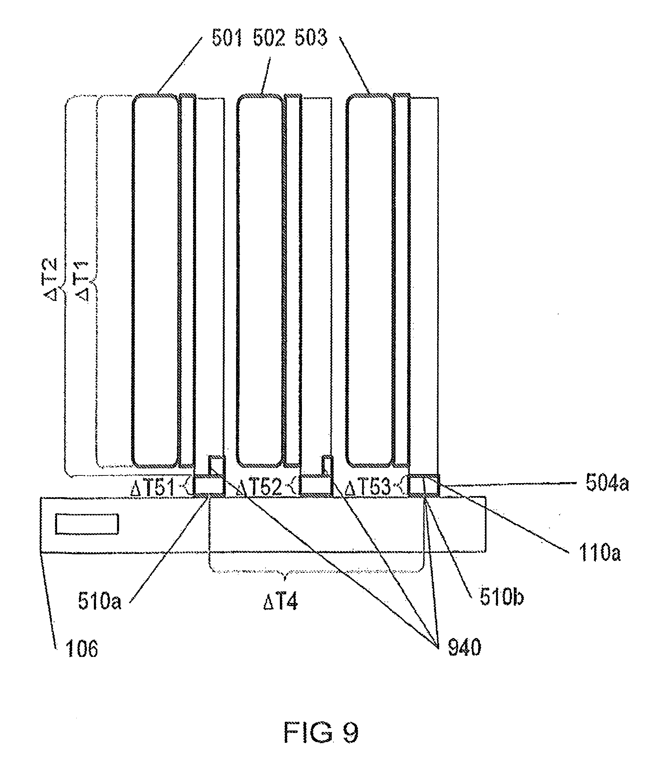

Fig. 9 zeigt eine Energiespeichervorrichtung mit einer Vorrichtung zur thermischen Anbindung einer Kühlplatte gemäß einem Ausführungsbeispiel der vorliegenden Erfindung. Gemäß diesem Ausführungsbeispiel wird ein variabler Wärmeübergang zwischen den Kühlblechen und der Kühlplatte durch verschieden große Kontaktflächen am Kühlblech erzielt.

Die in Fig. 9 gezeigte Energiespeichervorrichtung entspricht der in Fig. 7 gezeigten Energiespeichervorrichtung, mit dem Unterschied, dass der Wärmeübergang hier durch verschieden große Kontaktflächen der einzelnen Kühlbleche bezüglich der Zwischenfolie 504a realisiert wird, wobei die Kühlplatte 106 hier analog zu den Figuren 5a, 6 und 8 wieder als eine Kühlplatte mit Kühlkanälen ausgeführt ist. Im Unterschied zu Fig. 7 sind bei dem in Fig. 9 gezeigten Ausführungsbeispiel die Kühlbleche als Kühlbleche mit variabler Kontaktfläche ausgeführt, indem beispielsweise verschieden große Ausnehmungen 940 in den Seiten der Kühlbleche, die an die Zwischenfolie 504a angrenzen, vorgesehen sind. Die Größe einer jeweiligen Ausnehmung 940 bestimmt die Größe der Kontaktfläche des jeweiligen Kühlbleches zu der Zwischenfolie 504a und damit zu der Kühlplatte 106.

Bei dem in Fig. 9 gezeigten Ausführungsbeispiel wird der veränderliche Wärmeübergang zwischen Kühlblech und Kühlplatte auf ähnliche Weise hergestellt, wie es in Fig. 7 beschrieben ist, mit dem Unterschied, dass die Veränderung bei der Kontaktfläche an den Kühlblechen vorgenommen wird, z.B. durch geeignete Ausstanzungen, Lochungen, Verformungen, Prägungen etc.

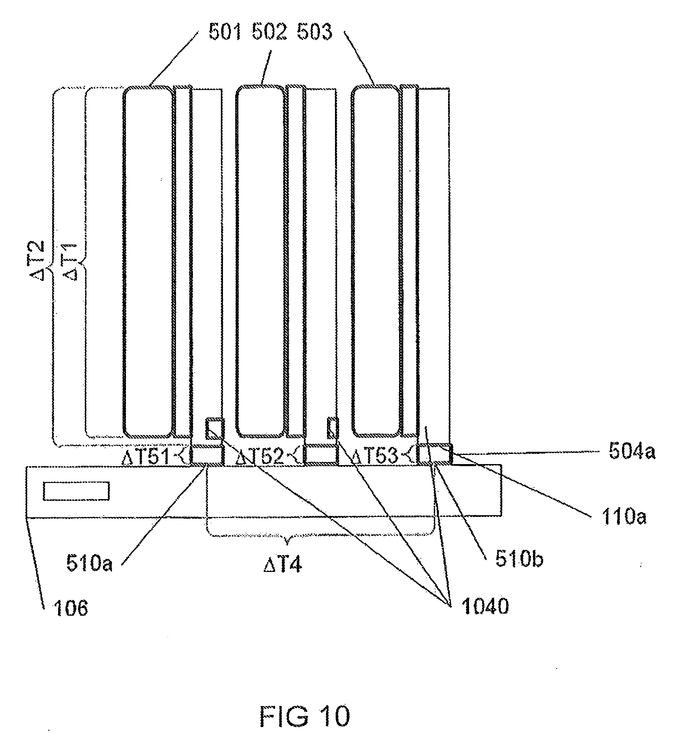

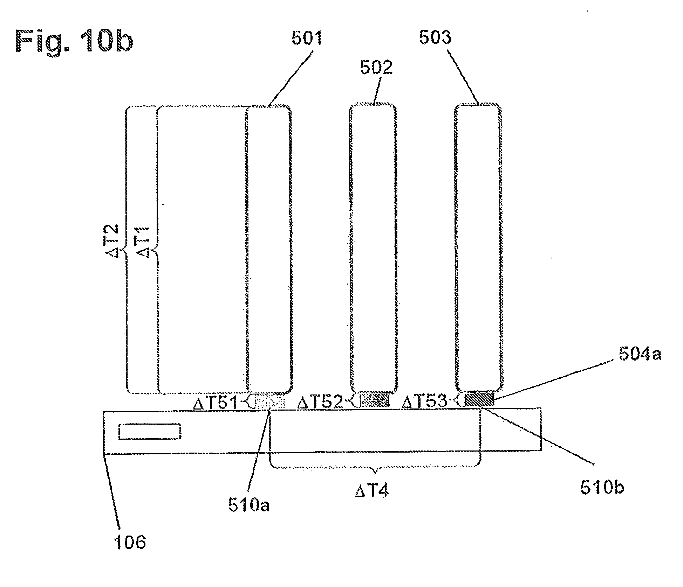

Fig. 10 zeigt eine Energiespeichervorrichtung mit einer Vorrichtung zur thermischen Anbindung einer Kühlplatte gemäß einem Ausführungsbeispiel der vorliegenden Erfindung. Gemäß diesem Ausführungsbeispiel wird ein variabler Wärmeübergang zwischen den Kühlblechen und der Kühlplatte durch verschieden große Materialquerschnitte in den Kühlblechen erzielt.

Fig. 10 zeigt eine Energiespeichervorrichtung, die der in Fig. 5a gezeigten Energiespeichervorrichtung entspricht, mit dem Unterschied, dass der Wärmeübergang nicht durch unterschiedliche Materialien in der Zwischenfolie 504a sondern durch verschieden große Materialquerschnitte in den Kühlblechen realisiert wird. Im Gegensatz zu dem in Fig. 5a gezeigten Ausführungsbeispiel kann die Folie hier als elektrisch isolierende Wärmeleitfolie mit gleichmäßigem Kontaktwiderstand ausgeführt sein. In Fig. 10 sind die Kühlbleche als Kühlbleche mit variablem Wärmeleitungsquerschnitt 1040 ausgeführt, d. h. für unterschiedliche Wärmeleiteigenschaften sind die Kühlbleche mit entsprechend unterschiedlichen Wärmeleitquerschnitten 1040 versehen.

Bei dem in Fig. 10 gezeigten Ausführungsbeispiel wird der veränderliche Wärmeübergang zwischen Kühlblech und Kühlplatte auf ähnliche Weise hergestellt, wie es in Fig. 7 beschrieben ist, mit dem Unterschied, dass die Veränderung beim Wärmeübergang von dem Kühlblech auf die Kühlplatte durch eine Verringerung der wärmeleitenden Querschnittsfläche im Kühlblech vorgenommen wird, z.B. durch eine abgestufte Verringerung der Kühlblechdicke. Am Schlechtpunkt kommt die höchste Kühlblechdicke zum Einsatz. Abgestuft Richtung Bestpunkt kommt mindestens eine geringere Kühlblechdicke zum Einsatz. Alternativ werden Ausklinkungen im Nahbereich des Fußpunktes vorgeschlagen, die die Querschnittsfläche der Kühlbleche geeignet verringern.

Fig. 10b zeigt ein weiteres Ausführungsbeispiel einer Energiespeichervorrichtung gemäß vorliegender Erfindung. Gemäß diesem Ausführungsbeispiel sind die einzelnen Energiespeicher 501, 502 und 503 über eine Zwischenfolie 504a mit der Kühlplatte 106 verbunden. Alternativ könnten die einzelnen Energiespeicher 501, 502 und 503 auch direkt mit der Kühlplatte 106 verbunden sein. Die Anbindung der Energiespeicher kann in weiteren Ausführungsbeispielen ähnlich erfolgen, wie die Anbindung der Kühlbleche an die Kühlplatte 106 gemäß den Figuren 5a, 6, 7 und 8.

Um die Temperaturdifferenz innerhalb der Zellen oder auch innerhalb der gesamten Zellanordnung auf gewünschte Weise zu reduzieren kann das jeweils geeignetste Ausführungsbeispiel ausgewählt werden. Dabei sind die gezeigten Ausführungsbeispiele nur beispielhaft gewählt und können miteinander kombiniert werden. Auch sind die beschriebenen Elemente, deren Anordnung und Anzahl nur beispielhaft gewählt und können entsprechend unterschiedlicher Gegebenheiten entsprechend angepasst werden.

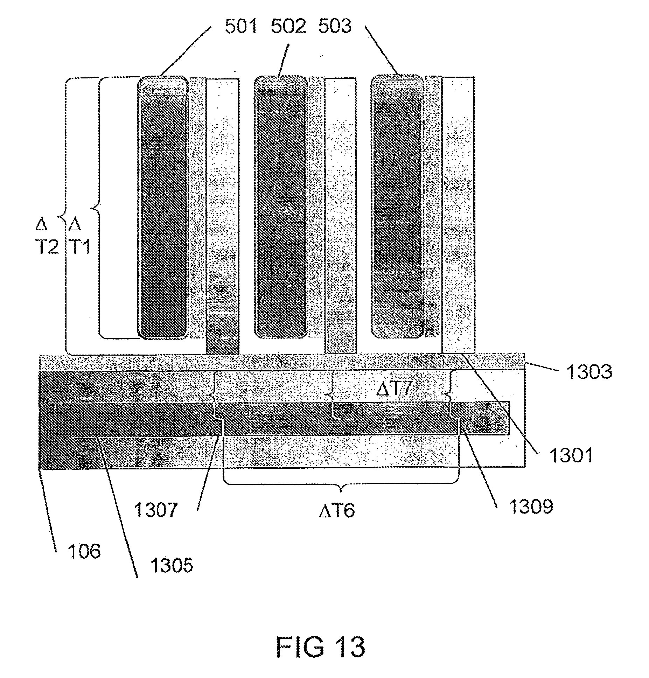

Fig. 13 zeigt eine nicht zur Erfindung gehörende Energiespeichervorrichtung mit einer Vorrichtung zur thermischen Anbindung eines Fluids an eine Kühlplatte 106, die einen gleichmäßigen Wärmeübergang zwischen dem Fluid und der Kühlplatte ermöglicht. Gezeigt sind Batteriezellen 501, 502, 503, die jeweils an einem Kühlblech angeordnet sind. Ein Fußpunkt 1301 eines Kühlblechs kann z.B. über eine Wärmeleitfolie 1303, die elektrisch isolierend ist und einen gleichmäßigen Kontaktwiderstand aufweist mit der Kühlplatte 106 verbunden sein. Die Kühlplatte 106 weist eine Kühlung, z.B. mit innenliegenden Kanälen 1305 auf, in denen das Fluid fließen kann. Ferner sind ein Bestpunkt 1307 und ein Schlechtpunkt 1309 der Kühlplatte 106 beziehungsweise des Kühlkanals 1305 gezeigt.

Der Kühlkanal 1305 zum Führen des Fluids weist eine Wärmeübergangsfläche zum Bereitstellen der thermischen Anbindung des Fluids an die Kühlplatte 106 auf. Bei der Wärmeübergangsfläche kann es sich um eine äußere Oberfläche des Kühlkanals 1305 handeln. Dabei weist der Kühlkanal 1305 einen ersten Bereich mit einer ersten Wärmeleiteigenschaft und mindestens einen weiteren Bereich mit einer weiteren Wärmeleiteigenschaft auf. Der erste Bereich und der mindestens eine weitere Bereich sind in Bezug auf die Wärmeübergangsfläche nebeneinander angeordnet. Gemäß diesem Beispiel weisen der erste Bereich und der mindestens eine weitere Bereich die gleiche Wärmeleiteigenschaft auf, um den gleichmäßigen Wärmeübergang zwischen dem Fluid und der Kühlplatte 106 zu ermöglichen.

Anhand der folgenden Figuren wird nach demselben Prinzip ein veränderlicher Wärmeübergang zwischen der Kühlplatte 106 und dem Kühlfluid vorgeschlagen, um die Temperaturdifferenzen zwischen mehreren Batteriezellen 501, 502, 503 möglichst klein zu halten. In entsprechender Weise kann ein variabler Wärmeübergang zwischen einem Heizblech und einem Heizfluid geschaffen werden.

Bei dem Ansatz wird der Wärmeübergang lokal zwischen dem wärme- bzw. kälteübertragenden Fluid und dem vom Fluid durchströmten Bauteil in Abhängigkeit der Temperatur an dieser Stelle verändert. Auf diese Weise kann, wie gewünscht, eine geringere Temperaturdifferenz auf der Kühlplattenoberfläche erreicht werden.

Der Wärmestrom Q lässt sich bekanntlich durch folgende Formel darstellen:

$$Q = \alpha \times A \times \Delta T$$

Dabei ist zwischen Zelloberfläche und Kühlblech:

A: die Kontaktfläche
$\alpha$: der Wärmeübergangskoeffizient
$\Delta T$: die treibende Temperaturdifferenz

Der veränderliche Wärmeübergang kann auf verschiedene Weise realisiert werden. Analog zu den erfindungsgemäßen Lösungen wird diese Vorgehensweise angewendet auf den Wärmeübergang zwischen dem wärme- bzw.

kälte-übertragenden Fluid und dem vom Fluid durchströmten Bauteil, häufig als "Kühlplatte" bezeichnet, an dem die Kühlbleche oder Batteriezellen zur Wärmeabfuhr angebracht sind

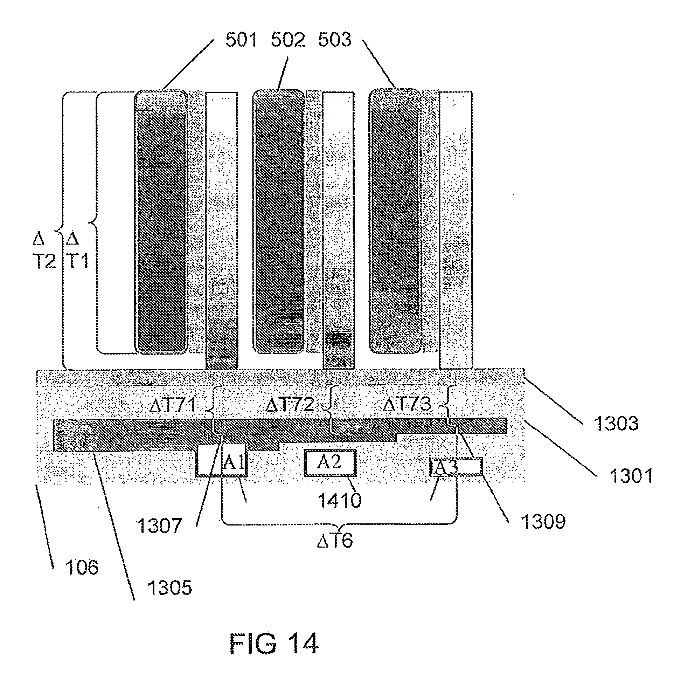

Fig. 14 zeigt eine nicht zur Erfindung gehörende Energiespeichervorrichtung mit einer Vorrichtung zur thermischen Anbindung eines Fluids an eine Kühlplatte 106, die einen variablen Wärmeübergang zwischen dem Fluid und der Kühlplatte ermöglicht. Der variable Wärmeübergang kann durch verschiedene alpha-Werte, z.B. verschiedene Strömungsgeschwindigkeiten realisiert werden.

Im Unterschied zu dem in Fig. 13 gezeigten Beispiel weist der Kanal gemäß diesem Beispiel in den einzelnen Bereichen unterschiedliche Kanalquerschnitte 1410 auf. So verkleinert sich der Querschnitt von einem großen Querschnitt 1410 A1 zu einem kleinen Querschnitt 1410 A3. Somit können eine erste Wärmeübergangseigenschaft und eine weitere Wärmeübergangseigenschaft durch unterschiedliche Kanalquerschnitte des ersten Bereichs und des mindestens einen weiteren Bereichs des Kühlkanals 1305 gekennzeichnet sein.

Gemäß diesem Beispiel wird der variable Wärmeübergang z.B. durch eine Veränderung des "$\alpha$"-Wertes erreicht. Der Wärmeübergangskoeffizient "$\alpha$" ist unter anderem eine Funktion der Strömungsgeschwindigkeit (laminar / turbulent usw.) Es wird daher vorgeschlagen, die Strömungsgeschwindigkeit, z.B. durch die Wahl der Kanal-Querschnittsfläche geeignet zu beeinflussen, so dass sich am "Schlechtpunkt" 1309 der beste Wärmeübergangskoeffizient ergibt. Abgestuft in Richtung "Bestpunkt"1307, z.B. im Kühlfall der kälteste Bereich der Kühlplatte 106 (umgekehrt im Heizfall der wärmste Bereich der "Heizplatte") wird mindestens ein weiterer schlechterer Wärmeübergangskoeffizient als der erstere eingesetzt. Auf diese Weise kann die Temperaturdifferenz auf der Oberfläche der Kühlplatte 106 und damit die Temperaturdifferenz zwischen den Batteriezellen 501, 502, 503 einer Gesamtbatterie verringert werden.

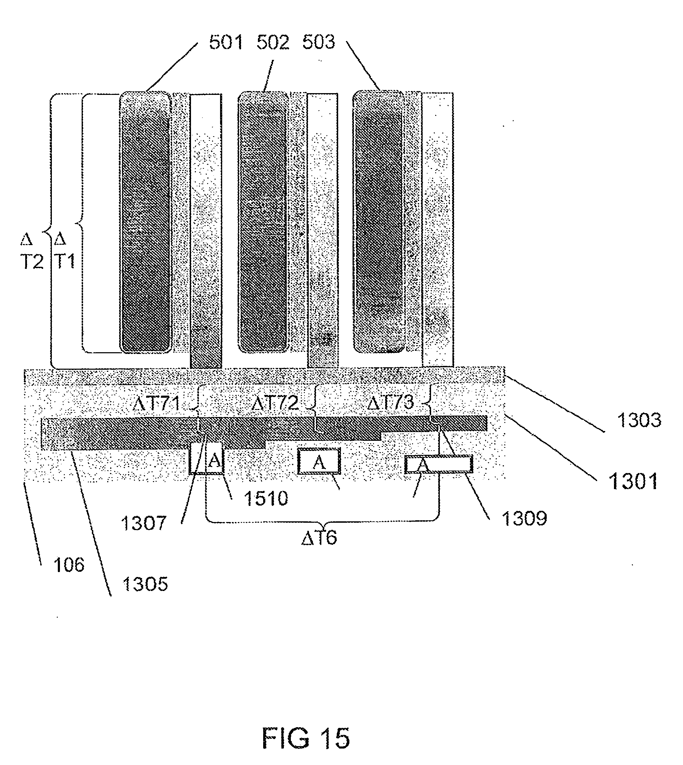

Fig. 15 zeigt eine nicht zur Erfindung gehörende Energiespeichervorrichtung mit einer Vorrichtung zur thermischen Anbindung eines Fluids an eine Kühlplatte 106, die einen variablen Wärmeübergang zwischen dem Fluid und der Kühlplatte ermöglicht. Der variable Wärmeübergang kann durch verschiedene alpha-Werte, z.B. verschiedene Kanalformen realisiert werden.

Im Unterschied zu dem in Fig. 14 gezeigten Beispiel weist der Kanal gemäß diesem Beispiel in den einzelnen Bereichen unterschiedliche Kanalformen 1510 auf.

Der Wärmeübergangskoeffizient "$\alpha$" ist unter anderem abhängig von der Kanalgeometrie. Gemäß diesem Ausführungsbeispiel wird durch eine Veränderung der Kanalgeometrie, z.B. dem Höhen- / Seitenverhältnis des Strömungsquerschnittes der Wärmeübergang geeignet beeinflusst.

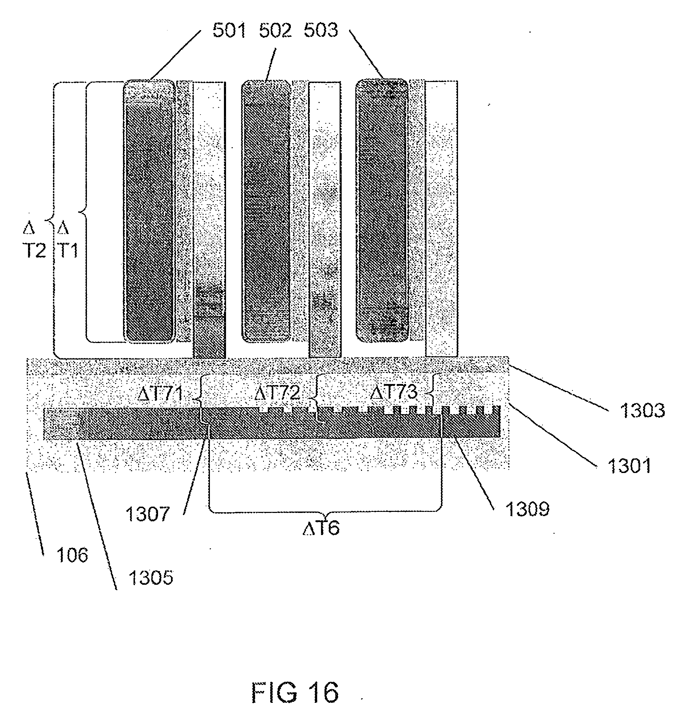

Fig. 16 zeigt eine nicht zur Erfindung gehörende Energiespeichervorrichtung mit einer Vorrichtung zur thermischen Anbindung eines Fluids an eine Kühlplatte 106, die einen variablen Wärmeübergang zwischen dem Fluid und der Kühlplatte ermöglicht. Der variable Wärmeübergang kann durch verschiedene alpha-Werte, z.B. verschiedene Wandrauhigkeiten realisiert werden.

Im Unterschied zu dem in Fig. 13 gezeigten Beispiel weist der Kanal 1305 gemäß diesem Beispiel in den einzelnen Bereichen unterschiedliche Wandrauhigkeiten auf. So erhöht sich die Wandrauhigkeit in Richtung des Schlechtpunkts 1309. Somit können die erste Wärmeübergangseigenschaft und die weitere Wärmeübergangseigenschaft durch unterschiedliche Oberflächenstrukturen einer Innenwand des Kühlkanals 1305 in dem ersten Bereich und dem mindestens einen weiteren Bereichs gekennzeichnet sein.

Weiterhin ist der Wärmeübergangskoeffizient "$\alpha$" unter anderem abhängig von der Kanalwandrauhigkeit bzw. Strömungswiderständen. Gemäß diesem Ausführungsbeispiel wird daher auch vorgeschlagen durch Veränderung der Kanalwandrauhigkeit oder sonstigen Strömungswiderständen wie z.B. Versperrungen, Querschnittssprüngen, Umlenkungen usw. den Wärmeübergang geeignet zu beeinflussen.

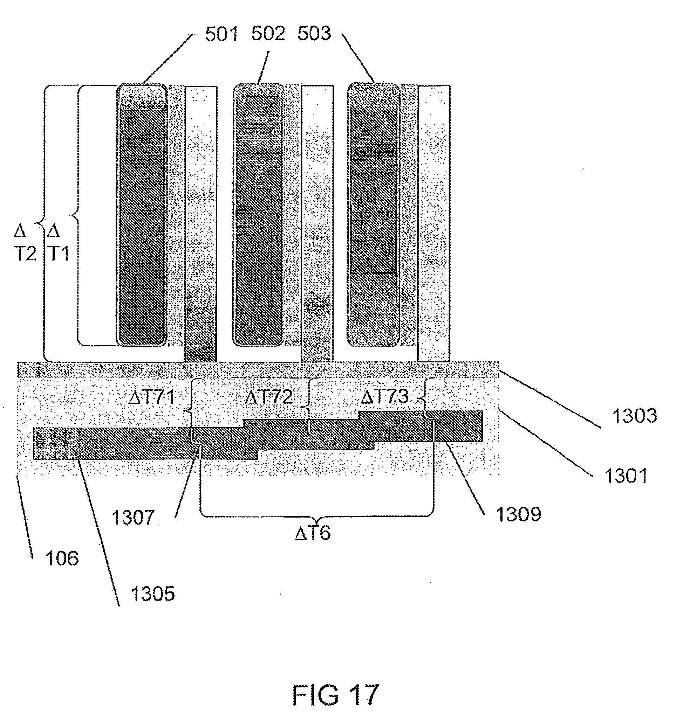

Fig. 17 zeigt eine nicht zur Erfindung gehörende Energiespeichervorrichtung mit einer Vorrichtung zur thermischen Anbindung eines Fluids an eine Kühlplatte 106, die einen variablen Wärmeübergang zwischen dem Fluid und der Oberfläche der Kühlplatte ermöglicht. Der variable Wärmeübergang kann durch verschieden große wärmeleitende Schichtdicken, z.B. Kanaltiefen realisiert werden.

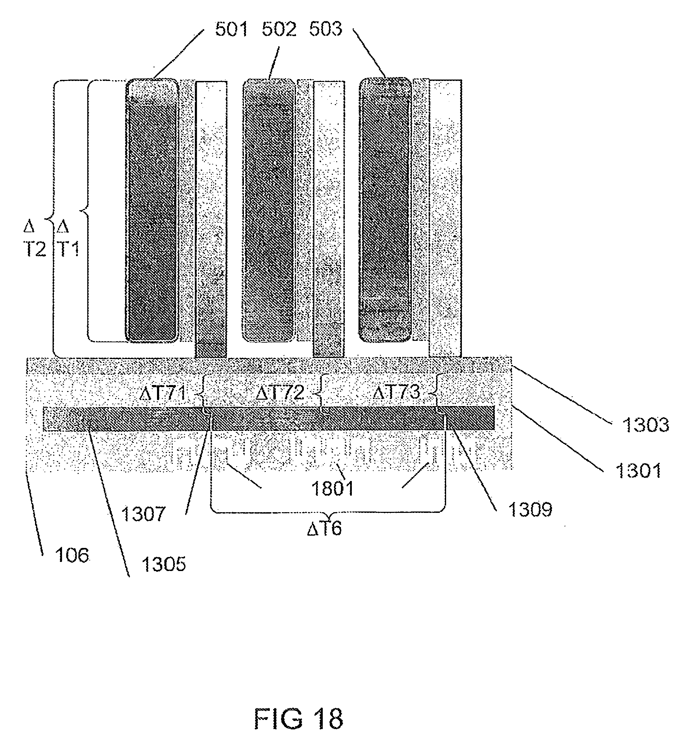

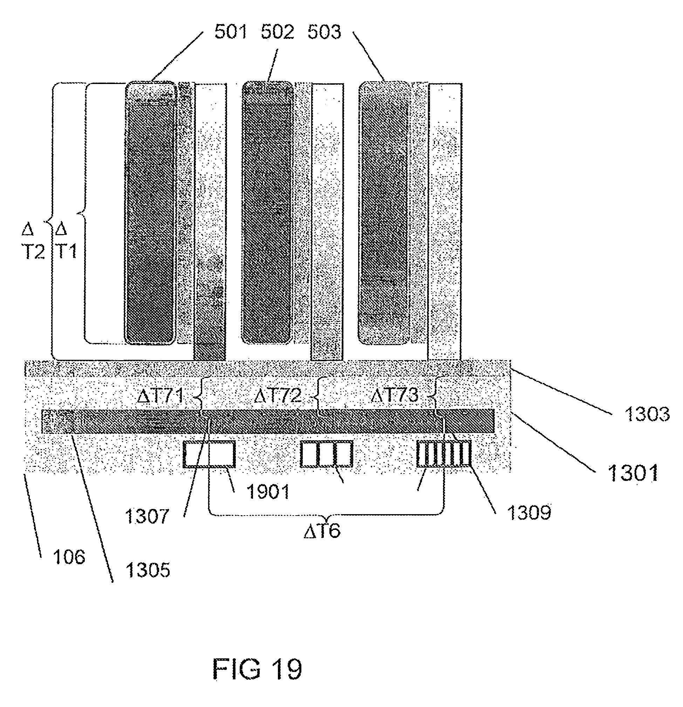

Im Unterschied zu dem in Fig. 13 gezeigten Beispiel weist der Kanal 1305 gemäß diesem Beispiel in den einzelnen Bereichen unterschiedliche Abstände zur Wärmeleitfolie 1303 auf. So verkleinert sich der Abstand stufenweise in Richtung des Schlechtpunkts 1309. Somit können die erste Wärmeübergangseigenschaft und die weitere Wärmeübergangseigenschaft durch unterschiedliche Abstände des ersten Bereichs und des mindestens einen weiteren Bereichs von der Wärmeübergangsfläche gekennzeichnet sein. Somit kann der variable Wärmeübergang z.B. durch eine Veränderung des "A"-Wertes erzielt. Es wird daher vorgeschlagen verschieden große Wärmeübergangsflächen und Wärmeleitungslängen, z.B. durch Einsatz unterschiedlicher Kanalgeometrien, enger bzw. weiter Abstand der Fluidkanäle, gezeigt in Fig. 18, oberflächennaher bzw. -ferner Lage der Fluidkanäle, gezeigt in Fig. 17, dem Einsatz von Rippen, gezeigt in Fig. 19, Turbulenzblechen -drähten usw. zwischen dem Fluid und der Kühlplatte einzusetzen. So dass am Schlechtpunkt 1309 (z.B. dem im Kühlfall wärmsten Bereich der Kühlplatte - umgekehrt im Heizfall dem kältesten Bereich der "Heizplatte") eine möglichst große Wärmeübergangsfläche zwischen Fluid und Kühlplatte zur Verfügung steht. Abgestuft in Richtung "Bestpunkt" der Kühlplatte (im Kühlfall der kälteste Bereich der Kühlplatte - umgekehrt im Heizfall der wärmste Bereich der "Heizplatte") wird mindestens eine andere, bevorzugt kleinere Wärmeübergangsfläche eingesetzt, wodurch sich der Wärmeübergang lokal verschlechtert.

Fig. 18 zeigt eine nicht zur Erfindung gehörende Energiespeichervorrichtung mit einer Vorrichtung zur thermischen Anbindung eines Fluids an eine Kühlplatte 106, die einen variablen Wärmeübergang zwischen dem Fluid und der Kühlplatte ermöglicht. Der variable Wärmeübergang kann durch verschieden große wärmeübertragende Flächen, z.B. Kanalabstände realisiert werden.

Im Unterschied zu dem in Fig. 17 gezeigten Beispiel weist der Kanal 1305 gemäß diesem Beispiel in den einzelnen Bereichen unterschiedliche Kanalstrukturen 1801 auf. So verkleinert sich der Abstand zwischen Teilabschnitten einzelner Biegungen des Kanals 1305 in Richtung des Schlechtpunkts 1309. Somit können die erste Wärmeübergangseigenschaft und die weitere Wärmeübergangseigenschaft durch unterschiedliche Abstände von Teilstücken des Kühlkanals in dem ersten Bereich und dem mindestens einen weiteren Bereichs gekennzeichnet sein.

Fig. 19 zeigt eine nicht zur Erfindung gehörende Energiespeichervorrichtung mit einer Vorrichtung zur thermischen Anbindung eines Fluids an eine Kühlplatte 106, die einen variablen Wärmeübergang zwischen dem Fluid und der Kühlplatte ermöglicht. Der variable Wärmeübergang kann durch verschieden große wärmeübertragende Flächen, z.B. mit Rippen im Kanal realisiert werden.

Im Unterschied zu dem in Fig. 18 gezeigten Beispiel I weist der Kanal 1305 gemäß diesem Beispiel in den einzelnen Bereichen unterschiedliche Kanalquerschnitte 1901 auf. Somit können die erste Wärmeübergangseigenschaft und die weitere Wärmeübergangseigenschaft durch unterschiedlich große, innerhalb des Kühlkanals angeordnete, wärmeübertragende Flächen in dem ersten Bereich und dem mindestens einen weiteren Bereichs gekennzeichnet sein.

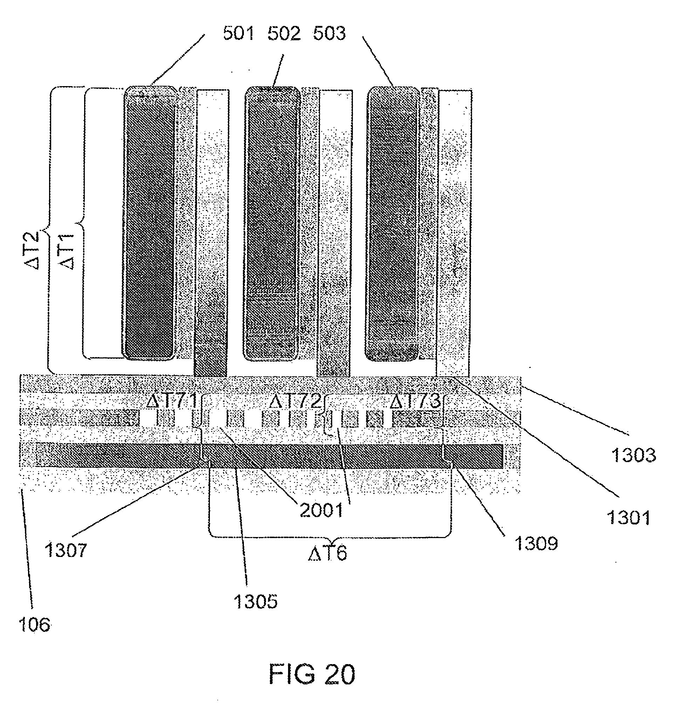

Fig. 20 zeigt eine nicht zur Erfindung gehörende Energiespeichervorrichtung mit einer Vorrichtung zur thermischen Anbindung eines Fluids an eine Kühlplatte 106, die einen variablen Wärmeübergang zwischen dem Fluid und der Oberfläche der Kühlplatte ermöglicht. Der variable Wärmeübergang kann durch verschieden große wärmeübertragende Flächen, z.B. durch Ausnehmungen realisiert werden.

Im Unterschied zu dem in Fig. 19 gezeigten Beispiel ist ein Bereich der Kühlplatte 106 zwischen der Schicht 1303 und dem Kanal 1305 gemäß diesem Beispiel mit Ausnehmungen 2001 versehen. Die Ausnehmungen 2001 weisen in den einzelnen Bereichen unterschiedliche Größen auf. Die Kühlplatte 106 kann z.B. aus mehreren Schichten bestehen und eine Kühlung z.B. mit innenliegenden Kanälen 1305 aufweisen. Die Ausnehmungen 2001 können in einer der Schichten der Kühlplatte 106 angeordnet sein. Somit können die erste Wärmeleiteigenschaft und die weitere Wärmeleiteigenschaft durch unterschiedlich große Ausnehmungen 2001 zwischen dem ersten Bereich des Kühlkanals 1305 und der wärmeübertragenden Fläche und dem mindestens einen weiteren Bereich des Kühlkanals 1305 und der wärmeübertragenden Fläche gekennzeichnet sein.

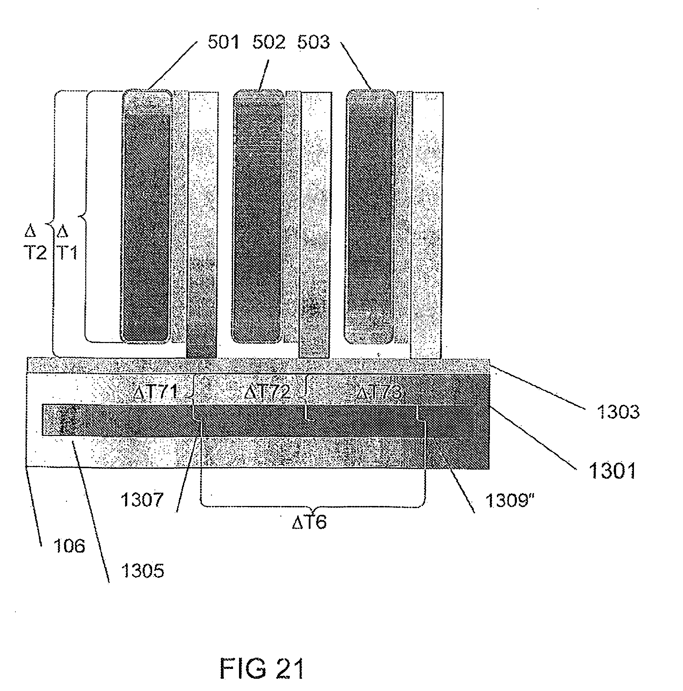

Fig. 21 zeigt eine nicht zur Erfindung gehörende Energiespeichervorrichtung mit einer Vorrichtung zur thermischen Anbindung eines Fluids an eine Kühlplatte 106, die einen variablen Wärmeübergang zwischen dem Fluid und der Kühlplatte ermöglicht. Der variable Wärmeübergang kann durch verschiedene $\Delta$T-Werte zwischen Fluid und Kühlplatte 106 realisiert werden.

Im Unterschied zu dem in Fig. 13 gezeigten Beispiel weist der Kanal 1305 gemäß diesem Beispiel in den einzelnen Bereichen unterschiedliche Fluidzuführungen auf. So kann der Bestpunkt 1307 einen Rücklauf und der Schlechtpunkt 1309 einen Vorlauf des Fluids darstellen. Somit können die erste Wärmeübergangseigenschaft und die weitere Wärmeübergangseigenschaft durch unterschiedliche Temperaturen des Fluids in dem ersten Bereich und dem mindestens einen weiteren Bereichs gekennzeichnet sein.

Somit kann der variable Wärmeübergang z.B. durch eine Veränderung des "$\Delta$T"-Wertes erzielt werden. Durch den Wärmeaustausch zwischen Fluid und Kühlplatte 106 verändert sich die mittlere Temperatur des Fluids bei der Durchströmung der Kühlplatte 106 und damit die treibende Temperatudifferenz $\Delta$T zwischen Fluid und Kühlplatte 106. Es wird daher vorgeschlagen den Pfad des Fluids geeignet zu wählen, z.B. durch eine geeignete Kanalstruktur, Kanalverlegung, so dass am Schlechtpunkt 1309 (z.B. dem im Kühlfall wärmsten Bereich der Kühlplatte) möglichst kaltes Fluid (z.B. der Vorlauf) zur Verfügung steht. Abgestuft in Richtung "Bestpunkt" 1307 der Kühlplatte 106 (im Kühlfall der kälteste Bereich der Kühlplatte) wird bereits erwärmtes Fluid (z.B. der Rücklauf) angeordnet.

Statt in einer Kühlplatte 106 mit innenliegenden Kanälen (z.B. Aufbau aus Schichtblechen) sind genauso an eine Kühlplatte 106 angelötete oder geklebte Kanäle z.B. in Form von Rohren, z.B. Flachrohren denkbar bei denen der Wärmeübergang lokal in gleicher Weise angepasst wird.

Die in den Figuren 14 bis 21 gezeigten Beispiel bieten wiederum den Vorteil, dass die Temperaturdifferenzen zwischen den Zellen auf gewünschte Weise reduziert werden können.

**Patentansprüche**

**1.** Vorrichtung zur thermischen Anbindung einer Mehrzahl von Kühlblechen oder einer Mehrzahl von Energiespeichern (102) an eine Kühlplatte (106), mit folgenden Merkmalen:

einem Kontaktelement (104b; 504a) mit einer Wärmeübergangsfläche zum Bereitstellen der thermischen Anbindung, wobei das Kontaktelement einen ersten Bereich mit einer ersten Wärmeleiteigenschaft und mindestens einen weiteren Bereich mit einer weiteren Wärmeleiteigenschaft aufweist und wobei der erste Bereich und der mindestens eine weitere Bereich in Bezug auf die Wärmeübergangsfläche nebeneinander angeordnet sind und wobei der erste Bereich zur thermischen Anbindung eines ersten Kühlblechs oder eines ersten Energiespeichers und der mindestens eine weitere Bereich zur thermischen Anbindung eines weiteren Kühlbleches oder eines weiteren Energiespeichers geeignet ist.

2. Vorrichtung gemäß Anspruch 1, bei der die erste Wärmeleiteigenschaft und die weitere Wärmeleiteigenschaft durch unterschiedliche Kontaktwiderstände des ersten Bereichs und des mindestens einen weiteren Bereichs gekennzeichnet sind.

3. Vorrichtung gemäß Anspruch 2, bei der der erste Bereich ein erstes Material mit einem ersten Kontaktwiderstand und der mindestens eine weitere Bereich ein weiteres Material mit einem weiteren Kontaktwiderstand aufweist.

4. Vorrichtung gemäß Anspruch 2 oder 3, bei der die unterschiedlichen Kontaktwiderstände des ersten und des mindestens einen weiteren Bereichs durch unterschiedliche Anpressdrücke (230; 630) auf den ersten Bereich und den mindestens einen weiteren Bereich bestimmt sind.

5. Vorrichtung gemäß einem der vorangegangenen Ansprüche, bei der die erste Wärmeleiteigenschaft und die weitere Wärmeleiteigenschaft durch unterschiedliche Kontaktflächen in dem ersten Bereich und dem mindestens einen weiteren Bereich gekennzeichnet sind.

6. Vorrichtung gemäß Anspruch 5, bei der die unterschiedlichen Kontaktflächen durch Ausnehmungen (840; 940) in dem Kontaktelement (104a, 104b; 504a) bestimmt sind.

7. Vorrichtung gemäß Anspruch 5 oder 6, bei der die unterschiedlichen Kontaktflächen durch Ausnehmungen (740) in der Kohlplatte (106) bestimmt sind.

8. Vorrichtung gemäß einem der vorangegangenen Ansprüche, bei der die erste Wärmeleiteigenschaft und die weitere Wärmeleiteigenschaft durch unterschiedliche Querschnitte (1040) des ersten Bereichs und des mindestens einen weiteren Bereichs gekennzeichnet sind.

9. Vorrichtung gemäß einem der vorangegangenen Ansprüche, bei der das Kontaktelement eine Folie (104a; 504a) und/oder ein Kühlblech (104b) ist.

10. Energiespeichervorrichtung mit folgenden Merkmalen:

mindestens einem Energiespeicher (102);
einer Kühlplatte (106); und
mindestens einer Vorrichtung (104a, 104b; 504a) zur thermischen Anbindung gemäß einem der vorangegangenen Ansprüche, die zwischen dem mindestens einen Energiespeicher und der Kühlplatte angeordnet ist.

**Claims**

1. A device for the thermal connection of a plurality of cooling fins or a plurality of energy storage units (102) to a cooling plate (106), witch the following features:

a contact element (104b; 504a) with a heat transfer surface for providing the thermal convection, wherein the contact element has a first region with a first heat-conducting property and at least one further region with a further heat-conducting property, and
wherein the first region and the at least one further region are arranged next to one another witch respect to the heat transfert surface and wherein the first region is suitable for the thermal convection of a first cooling fin or a first energy storage and the at least one further region for thermal confection of a further cooling fin or a further energy storage.

2. The device according to claim 1, in which the first heat-conducting property and the further heat-conducting property are **characterized by** different contact resistances of the first region and the at least one further region.

3. The device according to claim 2, in which the first region has a first material with a first contact resistance and the at least one further region has a further material witch a further contact resistance.

4. The device according to claim 2 or 3, in which the different contact resistance of the first and the at least one further region are determined buy different bearing pressures (230; 630) on the first region and the at least one further region.

5. The devise according to one of the preceding claims, in which the first heat-conducting property and the further heat-conducting property are **characterized by** different contact surfaces in the first region and the at least one further region.

6. The devise according to claim 5, in which the different contact surfaces are determined by recesses (840; 940) in the contact element (104a, 104b; 504a).

7. The devise according to claim 5 or 6, in which the different contact surfaces are determined by recesses (740) in the cooling plate (106).

8. The devise according to one of the preceding claims, in which the first heat-conducting property and the further heat-conducting property are **characterized by** different cross sections (1040) of the first region and the at least one further region.

9. The device according to one of the preceding claims, in which the contact element is a film (104a; 504a) and/or a cooling fin (104b).

10. An energy storage devise with the following features:

at least one energy storage (102); a cooling plate (106); and at least one device (104a, 104b; 504a) for the thermal connection according to one of the preceding claims, which is arranged between the at least one energy storage and the cooling plate.


**Revendications**

1. Dispositif servant à la liaison thermique d'une pluralité de tôles de refroidissement ou d'une pluralité d'accumulateurs d'énergie (102) agencés sur une plaque de refroidissement (106), ledit dispositif ayant les caractéristiques suivantes :

un élément de contact (104b; 504a) ayant une surface de transfert de chaleur servant à fournir la liaison thermique, où l'élément de contact présente une première zone ayant une première propriété de conductivité thermique, et au moins une autre zone ayant une autre propriété de conductivité thermique, et où la première zone et l'autre zone au moins au nombre de un sont disposées l'une à côté de l'autre par rapport à la surface de transfert de chaleur, et où la première zone est appropriée pour la liaison thermique d'une première tôle de refroidissement ou d'un premier accumulateur d'énergie, l'autre zone au moins au nombre de un étant appropriée pour la liaison thermique d'une autre tôle de refroidissement ou d'un autre accumulateur d'énergie.

2. Dispositif selon la revendication 1, dans lequel la première propriété de conductivité thermique et l'autre propriété de conductivité thermique sont **caractérisées par** des résistances de contact différentes de la première zone et de l'autre zone au moins au nombre de un.

3. Dispositif selon la revendication 2, dans lequel la première zone présente un premier matériau ayant une première résistance de contact, l'autre zone au moins au nombre de un présentant un autre matériau ayant une autre résistance de contact.

4. Dispositif selon la revendication 2 ou 3, dans lequel les résistances de contact différentes de la première zone et de l'autre zone au moins au nombre de un sont déterminées par des pressions de contact différentes (230; 630) s'exerçant sur la première zone et sur l'autre zone au moins au nombre de un.

**5.** Dispositif selon l'une quelconque des revendications précédentes, dans lequel la première propriété de conductivité thermique et l'autre propriété de conductivité thermique sont **caractérisées par** des surfaces de contact différentes dans la première zone et dans l'autre zone au moins au nombre de un.

**6.** Dispositif selon la revendication 5, dans lequel les surfaces de contact différentes sont déterminées par des creux (840; 940) formés dans l'élément de contact (104a, 104b; 504a).

**7.** Dispositif selon la revendication 5 ou 6, dans lequel les surfaces de contact différentes sont déterminées par des creux (740) formés dans la plaque de refroidissement (106).

**8.** Dispositif selon l'une quelconque des revendications précédentes, dans lequel la première propriété de conductivité thermique et l'autre propriété de conductivité thermique sont **caractérisées par** des sections différentes (1040) de la première zone et de l'autre zone au moines au nombre de un.

**9.** Dispositif selon l'une quelconque des revendications précédentes, dans lequel l'élément de contact est une feuille (104a; 504a) et/ou une tôle de refroidissement (104b).

**10.** Dispositif d'accumulateur d'énergie ayant les caractéristiques suivantes:

au moins un accumulateur d'énergie (102);
une plaque de refroidissement (106); et
au moins un dispositif (104a, 104b; 504a) servant à la liaison thermique selon l'une quelconque des revendications précédentes, dispositif qui est disposé entre l'accumulateur d'énergie au moins au nombre de un et la plaque de refroidissement.

FIG 1a

FIG 2

FIG 3

FIG 4

FIG 5a

FIG 6

FIG 7

FIG 8

FIG 9

FIG 10

Fig. 10b

FIG 11a

FIG 12a

FIG 13

FIG 14

FIG 15

FIG 16

FIG 17

FIG 18

FIG 19

FIG 20

FIG 21